# EUROPÄISCHE PATENTSCHRIFT

(11) **EP 2 890 728 B1**
(45) Veröffentlichungstag und Bekanntmachung des Hinweises auf die Patenterteilung: **09.02.2022**
(21) Anmeldenummer: 13756098.3
(22) Anmeldetag: 27.08.2013
(51) Int. Cl.: C08G 63/676, C08G 65/20, C09D 167/08, C08G 65/332, C09D 171/02

(54) **POLYMER IN FARB- UND/ODER EFFEKTGEBENDEN MEHRSCHICHTIGEN LACKIERUNGEN**
POLYMER IN MULTI-COAT COLOUR AND/OR EFFECT PAINT SYSTEM
POLYMÈRE DANS DES PEINTURES MULTICOUCHES COLORÉES OU À EFFET

(30) Priorität: 28.08.2012 EP 12182050
(43) Veröffentlichungstag der Anmeldung: 08.07.2015
(73) Patentinhaber: BASF Coatings GmbH, 48165 Münster (DE)
(72) Erfinder: HOFFMANN, Peter, 48308 Senden (DE); STEINMETZ, Bernhard, 97535 Rütschenhausen (DE); LAVALAYE, Jorn, 97082 Würzburg (DE); REUTER, Hardy, 48167 Münster (DE)
(74) Vertreter: BASF IP Association
(86) Internationale Anmeldenummer: PCT/EP2013/067742
(87) Internationale Veröffentlichungsnummer: WO 2014/033135

(56) Entgegenhaltungen:
- WO-A1-03/106010

## Beschreibung

Die Erfindung betrifft ein neuartiges Polymer. Sie betrifft ferner einen pigmentierten wässrigen Basislack, welcher dieses Polymer enthält sowie die Verwendung des besagten Polymers in pigmentierten wässrigen Basislacken. Sie betrifft ferner ein Verfahren zur Herstellung von Mehrschichtlackierungen sowie die mit Hilfe des besagten Verfahrens herstellbaren Mehrschichtlackierungen. Zudem betrifft die vorliegende Erfindung die Reparatur von Fehlstellen auf Mehrschichtlackierungen.

Aus dem Stand der Technik ist eine Vielzahl von Verfahren zur Herstellung von farb- und/oder effektgebenden mehrschichtigen Lackierungen bekannt. Aus dem Stand der Technik (vgl. z.B. die deutsche Patentanmeldung DE 199 48 004 A1, Seite 17, Zeile 37, bis Seite 19, Zeile 22, oder das deutsche Patent DE 100 43 405 C1, Spalte 3, Absatz [0018], und Spalte 8, Absatz [0052], bis Spalte 9, Absatz [0057], in Verbindung mit Spalte 6, Absatz [0039], bis Spalte 8, Absatz [0050]) ist das folgende Verfahren bekannt, bei dem
(1) ein pigmentierter wässriger Basislack auf ein Substrat aufgebracht wird,
(2) aus dem in Stufe (1) aufgebrachten Lack ein Polymerfilm gebildet wird,
(3) auf die so erhaltene Basislackschicht ein Klarlack aufgebracht wird und anschließend
(4) die Basislackschicht zusammen mit der Klarlackschicht gehärtet wird.

Dieses Verfahren wird beispielsweise in großem Umfang sowohl für die Erstlackierung (OEM) von Automobilen sowie der Lackierung von Metall- und Kunststoffanbauteilen eingesetzt. Dabei treten unter bestimmten Bedingungen Haftungsprobleme, insbesondere zwischen Basislack und Klarlack auf. Zudem wird das Verfahren auch für die Automobilreparaturlackierung von Automobilkarossen eingesetzt. Hier ist sowohl die OEM-Automobilreparaturlackierung als auch die Automobilreparaturlackierung gemeint, welche beispielsweise in einer Werkstatt stattfindet. Dabei ist vor allem die Haftung zwischen dem bei der Reparaturlackierung eingesetzten Basislack und der Erstlackierung problematisch.

DE4009858A beschreibt Polyester, die im pigmentierten wässrigen Basislack eingesetzt werden können.

Der vorliegenden Erfindung lag also die Aufgabe zugrunde, ein Polymer zur Verfügung zu stellen, mit Hilfe dessen sich Beschichtungen herstellen lassen, die die oben bezeichneten Nachteile des Standes der Technik nicht aufweisen. Hierunter ist eine Haftungsverbesserung sowohl bei der Lackierung von Metall- und Kunststoffsubstraten als auch bei der Autoreparaturlackierung zu verstehen. Bei der Lackierung von Metall- und Kunststoffsubstraten steht hier neben der Haftung des Basislacks auf dem Untergrund die Haftung zwischen Basislack und Klarlack im Vordergrund. Bei der Autoreparaturlackierung steht neben der Haftung zwischen Basislack und Klarlack die Haftung zwischen Basislack und Erstlackierung im Vordergrund. Diese soll vor allem für den Einsatz in der OEM-Automobilreparaturlackierung verbessert werden.

Die Haftungsproblematik ist insbesondere dann eklatant, wenn die beschichteten Substrate der Witterung ausgesetzt sind. Die Aufgabe der vorliegenden Erfindung bestand somit auch darin, Beschichtungen zur Verfügung zu stellen, die auch, nachdem sie der Witterung ausgesetzt waren, noch hervorragende Haftungseigenschaften besitzen.

Eine schlechte Haftung manifestiert sich im Falle einer Belastung durch Witterung besonders auch im Auftreten von Blasen und Quellungen. Eine weitere Aufgabe der vorliegenden Erfindung bestand ferner darin, dass Auftreten von Blasen und Quellungen zu verhindern oder zu reduzieren.

Diese Aufgabe wurde überraschenderweise durch ein Polymer gelöst, welches herstellbar ist durch Umsetzung von
(a) Dimerfettsäuren mit
(b) mindestens einem Polyether der allgemeinen Strukturformel (I) 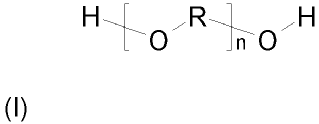 wobei es sich bei R um einen C₄-Alkylenrest handelt und n entsprechend so gewählt ist, dass der besagte Polyether ein zahlenmittleres Molekulargewicht von 450 bis 2200 g/mol besitzt, die Komponenten (a) und (b) in einem molaren Verhältnis von 0,7/2,3 bis 1,3/1,7 eingesetzt werden und das resultierende Polymer ein zahlenmittleres Molekulargewicht von 1500 bis 5000 g/mol und eine Säurezahl < 10 mg KOH/g besitzt.

Die Bedingung, dass n so gewählt wird, dass der besagte Polyether ein zahlenmittleres Molekulargewicht von 450 bis 2200 g/mol besitzt, sei wie folgt veranschaulicht. Handelt es sich beispielsweise bei R um einen Tetramethylenrest und soll das zahlenmittlere Molekulargewicht 1000 g/mol betragen, so liegt n im Mittel zwischen 13 und 14.

### Komponente (a):

Als Dimerfettsäuren werden Gemische bezeichnet, die durch Oligomerisierung von ungesättigten Fettsäuren hergestellt werden. Als Ausgangsstoffe können ungesättigte C₁₂- bis C₂₂-Fettsäuren eingesetzt werden.

Im Sinne der vorliegenden Erfindung werden bevorzugt C₁₈-Fettsäuren eingesetzt. Besonders bevorzugt werden C₁₈-Fettsäuren und ganz besonders bevorzugt, Linolen-, Linol- und/oder Ölsäure eingesetzt.

In Abhängigkeit von der Reaktionsführung entsteht bei der oben bezeichneten Oligomerisierung ein Gemisch, das hauptsächlich dimere, aber auch trimere Moleküle sowie monomere Moleküle und sonstige Nebenprodukte enthält. Üblicherweise wird destillativ gereinigt. Handelsübliche Dimerfettsäuren enthalten im Allgemeinen mindestens 80 Gew.-% dimere Moleküle, bis zu 19 Gew.-% trimere Moleküle und maximal 1 Gew.-% monomerer Moleküle und sonstiger Nebenprodukte.

Im Sinne der vorliegenden Erfindung ist es bevorzugt, Dimerfettsäuren einzusetzen, die zu mindestens 90 Gew.-% aus dimeren Molekülen, weniger als 5 Gew.-% aus trimeren Molekülen und zu weniger als 5 Gew.-% aus monomeren Molekülen und sonstigen Nebenprodukten bestehen. Es ist besonders bevorzugt, Dimerfettsäuren einzusetzen, die zu 95 bis 98 Gew.-% aus dimeren Molekülen, weniger als 5 Gew.-% aus trimeren Molekülen und zu weniger als 1 Gew.-% aus monomeren Molekülen und sonstigen Nebenprodukten bestehen. Ebenfalls besonders bevorzugt werden Dimerfettsäuren eingesetzt, die zu mindestens 98 Gew.-% aus dimeren Molekülen, weniger als 1,5 Gew.-% aus trimeren Molekülen und zu weniger als 0,5 Gew.-% aus monomeren Molekülen und sonstigen Nebenprodukten bestehen.

Dimerfettsäuren enthalten je nach Reaktionsführung sowohl aliphatische als auch aromatische Molekülfragmente. Die aliphatischen Molekülfragmente lassen sich ferner aufteilen in lineare und cyclische, welche wiederum gesättigt oder ungesättigt sein können. Durch eine Hydrierung lassen sich die aromatischen sowie die ungesättigten aliphatischen Molekülfragmente in entsprechende gesättigte aliphatische Molekülfragmente umwandeln.

Im Sinne der vorliegenden Erfindung werden bevorzugt solche Dimerfettsäuren eingesetzt welche nahezu ausschließlich gesättigte aliphatische Molekülfragmente enthalten und somit bevorzugt eine lodzahl ≤ 10 g/100g besitzen.

Besonders bevorzugt sind solche Dimerfettsäuren, die zu mindestens 98 Gew.-% aus dimeren Molekülen weniger als 1,5 Gew.-% aus trimeren Molekülen und zu weniger als 0,5 Gew.-% aus monomeren Molekülen und sonstigen Nebenprodukten bestehen und zudem eine lodzahl ≤ 10 g/100g besitzen.

Als ganz besonders bevorzugt einzusetzende Dimerfettsäuren sind zu nennen Radiacid 0970, Radiacid 0971, Radiacid 0972, Radiacid 0975, Radiacid 0976 und Radiacid 0977 der Firma Oleon, Pripol 1006, Pripol 1009, Pripol 1012, und Pripol 1013 der Firma Unichema, Empol 1008, Empol 1061 und Empol 1062 der Firma Cognis sowie Unidyme 10 und Unidyme TI der Firma Arizona Chemical.

### Komponente (b):

Als Komponente (b) wird mindestens ein Polyether der allgemeinen Strukturformel (I) 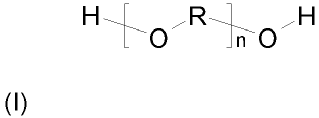 eingesetzt, wobei es sich bei R um einen C₄-Alkylrest handelt. Der Index n ist jeweils so zu wählen, dass der besagte Polyether ein zahlenmittleres Molekulargewicht von 450 bis 2200 g/mol besitzt. Besonders bevorzugt besitzt er ein zahlenmittleres Molekulargewicht von 700 bis 1400 g/mol und ganz besonders bevorzugt von 800 bis 1200 g/mol. Das zahlenmittlere Molekulargewicht wird mittels Gelpermeationschromatographie gegen einen Polymethylmethacrylatstandard gemessen; Eluent: Tetrahydrofuran.

In dem erfindungsgemäß einzusetzenden Polyether können alle n Reste R gleich sein. Ebenso ist es aber auch möglich, das unterschiedliche Arten von Resten R vorhanden sind. Bevorzugt sind alle Reste R gleich.

Bei R handelt es sich um einen C₄-Alkylenrest. Besonders bevorzugt handelt es sich um einen Tetramethylenrest.

Ganz besonders bevorzugt handelt es sich bei dem erfindungsgemäß einzusetzenden Polyether um Polytetrahydrofuran.

Die Herstellung des erfindungsgemäßen Polymers weist keine Besonderheiten auf. Üblicherweise erfolgt die Veresterung mit Hilfe eines Wasserabscheiders. Dabei werden die Komponenten (a) und (b) in einem molaren Verhältnis von 0,7/2,3 bis 1,3/1,7, bevorzugt von 0,8/2,2 bis 1,2/1,8 und ganz besonders bevorzugt von 0,9/2,1 bis 1,1/1,9 eingesetzt. Die Reaktion wird abgebrochen, wenn das erfindungsgemäße Polymer ein Säurezahl von < 10 mg KOH/g besitzt. Bevorzugt besitzt es eine Säurezahl von < 7,5 mg KOH/g und ganz besonders bevorzugt von < 5 mg KOH/g. Die Säurezahl wird dabei mittels der DIN 53402 bestimmt.

Das resultierende Polymer besitzt ein zahlenmittleres Molekulargewicht von 1500 bis 5000 g/mol, bevorzugt 2000 bis 4500 g/mol und ganz besonderes bevorzugt 3000 bis 4000 g/mol. Das zahlenmittlere Molekulargewicht wird mittels Gelpermeationschromatographie gegen einen Polymethylmethacrylatstandard gemessen; Eluent: Tetrahydrofuran.

Die erfindungsgemäßen Polymere besitzen eine geringe Wasserlöslichkeit. Werden Sie in wässrigen Systemen eingesetzt, so reichern sie sich aufgrund ihrer Unverträglichkeit an den Grenzflächen an und sind somit in der Lage zu einer Verbesserung der Haftung zu angrenzenden Schichten beizutragen.

Wenn ein zahlenmittleres Molekulargewicht von 5000 g/mol überschritten wird, so wird die Löslichkeit der erfindungsgemäßen Polymere in wässrigen Systemen derart gering, dass sie zur Kristallisation neigen und ausfallen können. Wird ein zahlenmittleres Molekulargewicht von 1500 g/mol unterschritten so erhöht sich die Wasserlöslichkeit des besagten Polymers derart, dass es sich nicht mehr in ausreichender Konzentration an den Grenzflächen anreichern kann. Eine Haftungsverbesserung lässt sich dann nicht mehr erzielen.

Besonders bevorzugte Ausführungsformen werden im Folgenden genannt:
a) In einer besonders bevorzugten Ausführungsform des erfindungsgemäßen Polymers wird die Dimerfettsäure aus Linolen-, Linol- und/oder Ölsäure hergestellt, besteht zu mindestens 98 Gew.-% aus dimeren Molekülen, weniger als 1,5 Gew.-% aus trimeren Molekülen und zu weniger als 0,5 Gew.-% aus monomeren Molekülen und sonstigen Nebenprodukten und besitzt eine lodzahl von ≤ 10 g/100g.
b) In einer weiteren besonders bevorzugten Ausführungsform des erfindungsgemäßen Polymers handelt es sich bei dem erfindungsgemäß einzusetzenden Polyether um Polytetrahydrofuran und er besitzt zudem ein zahlenmittleres Molekulargewicht von 800 bis 1200 g/mol.
c) In einer weiteren besonders bevorzugten Ausführungsform des erfindungsgemäßen Polymers werden die Komponenten (a) und (b) in einem molaren Verhältnis von 0,9/2,1 bis 1,1/1,9 eingesetzt.
d) In einer weiteren besonders bevorzugten Ausführungsform des erfindungsgemäßen Polymers besitzt dieses eine Säurezahl von < 5 mg KOH/g.
e) In einer weiteren besonders bevorzugten Ausführungsform des erfindungsgemäßen Polymers besitzt dieses ein zahlenmittleres Molekulargewicht von 3000 bis 4000 g/mol.

In einer ganz besonders bevorzugten Ausführungsform des erfindungsgemäßen Polymers sind alle die unter a) bis e) angegebenen Merkmale in Kombination realisiert.

Die vorliegende Erfindung betrifft ferner einen pigmentierten wässrigen Basislack, welcher mindestens Polymer, herstellbar durch Umsetzung von
(a) Dimerfettsäuren mit
(b) mindestens einem Polyether der allgemeinen Strukturformel (I) 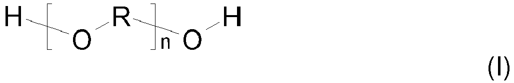 wobei es sich bei R um einen C₃-C₆-Alkylenrest handelt und n entsprechend so gewählt ist, dass der besagte Polyether ein zahlenmittleres Molekulargewicht von 450 bis 2200 g/mol besitzt, die Komponenten (a) und (b) in einem molaren Verhältnis von 0,7/2,3 bis 1,3/1,7 eingesetzt werden und das resultierende Polymer ein zahlenmittleres Molekulargewicht von 1500 bis 5000 g/mol und eine Säurezahl < 10 mg KOH/g besitzt,
   enthält.

Unter einem Basislack ist ein in der Automobil-Lackierung und allgemeinen Industrielackierung eingesetzter farbgebender Zwischenbeschichtungsstoff zu verstehen. Dieser wird im Allgemeinen auf einem mit Füller oder Grundierfüller vorbehandelten Metall- oder Kunststoffuntergrund, mitunter auch direkt auf dem Kunststoffuntergrund aufgebracht. Auch Altlackierungen, welche gegebenenfalls noch vorbehandelt werden müssen (beispielsweise durch Anschleifen), können als Untergründe dienen. Mittlerweile ist es durchaus üblich, mehr als eine Basislackschicht aufzutragen. Dementsprechend stellt in einem solchen Fall eine erste Basislackschicht den Untergrund für eine zweite dar. Um eine Basislackschicht insbesondere gegen Umwelteinflüsse zu schützen, wird auf dieser mindestens noch eine zusätzliche Klarlackschicht appliziert.

Die Summe über die gewichtsprozentualen Anteile, bezogen auf das Gesamtgewicht des pigmentierten wässrigen Basislacks, aller in dem Basislack enthaltenen Polymere beträgt bevorzugt 0,1 bis 30 Gew.-%, besonders bevorzugt 1 bis 20 Gew.-% und ganz besonders bevorzugt 1,5 bis 15 Gew.-% oder sogar 2 bis 12 Gew.-%.

Liegt der Gehalt des in dem Basislack enthaltenen Polymers unter 0,1 Gew.-% so ist es gegebenenfalls möglich, dass keine Verbesserung der Haftung mehr erzielt wird. Liegt der Gehalt bei mehr als 30 Gew.-% so können unter Umständen Nachteile auftreten, wie zum Beispiel eine Inkompatibilität des besagten Polymers im Basislack. Eine solche Inkompatibilität kann sich beispielsweise durch ungleichmäßigen Verlauf sowie durch Ausschwimmen oder Absetzen zeigen.

Wie oben bereits beschrieben, ist das Polymer in wässrigen Systemen schwer löslich. Es wird daher bevorzugt direkt bei der Herstellung des pigmentieren wässrigen Basislacks eingesetzt und nicht erst nach erfolgter Herstellung in den ansonsten fertigen Basislack hinzugegeben.

In einer bevorzugten Ausführungsform beträgt die Summe über die gewichtsprozentualen Anteile aller in dem Basislack enthaltenen Polymere 0,1 bis 30 Gew.-% bezogen auf das Gesamtgewicht des pigmentierten wässrigen Basislacks. Für den Fall, dass bevorzugte Ausführungsformen der in dem Basislack enthaltenen Polymere eingesetzt werden, beträgt die Summe über die gewichtsprozentualen Anteile aller bevorzugten Ausführungsformen der in dem Basislack enthaltenen Polymere bevorzugt ebenfalls 0,1 bis 30 Gew.-% bezogen auf das Gesamtgewicht des pigmentierten wässrigen Basislacks. Besonders bevorzugt enthält der pigmentierte wässrige Basislack als in dem Basislack enthaltenen Polymere ausschließlich bevorzugte Ausführungsformen der in dem Basislack enthaltenen Polymere.

In einer bevorzugten Ausführungsform beträgt die Summe über die gewichtsprozentualen Anteile aller in dem Basislack enthaltenen Polymere 1 bis 20 Gew.-% bezogen auf das Gesamtgewicht des pigmentierten wässrigen Basislacks. Für den Fall, dass bevorzugte Ausführungsformen der in dem Basislack enthaltenen Polymere eingesetzt werden, beträgt die Summe über die gewichtsprozentualen Anteile aller bevorzugten Ausführungsformen der in dem Basislack enthaltenen Polymere bevorzugt ebenfalls 1 bis 20 Gew.-% bezogen auf das Gesamtgewicht des pigmentierten wässrigen Basislacks. Besonders bevorzugt enthält der pigmentierte wässrige Basislack als in dem Basislack enthaltenen Polymere ausschließlich bevorzugte Ausführungsformen der in dem Basislack enthaltenen Polymere.

In einer ganz besonders bevorzugten Ausführungsform beträgt die Summe über die gewichtsprozentualen Anteile aller in dem Basislack enthaltenen Polymere 1,5 bis 15 Gew.-% bezogen auf das Gesamtgewicht des pigmentierten wässrigen Basislacks. Für den Fall, dass bevorzugte Ausführungsformen der in dem Basislack enthaltenen Polymere eingesetzt werden, beträgt die Summe über die gewichtsprozentualen Anteile aller bevorzugten Ausführungsformen der in dem Basislack enthaltenen Polymere bevorzugt ebenfalls 1,5 bis 15 Gew.-% bezogen auf das Gesamtgewicht des pigmentierten wässrigen Basislacks. Besonders bevorzugt enthält der pigmentierte wässrige Basislack als in dem Basislack enthaltenen Polymere ausschließlich bevorzugte Ausführungsformen der in dem Basislack enthaltenen Polymere.

In einer ebenfalls ganz besonders bevorzugten Ausführungsform beträgt die Summe über die gewichtsprozentualen Anteile aller in dem Basislack enthaltenen Polymere 2 bis 12 Gew.-% bezogen auf das Gesamtgewicht des pigmentierten wässrigen Basislacks. Für den Fall, dass bevorzugte Ausführungsformen der in dem Basislack enthaltenen Polymere eingesetzt werden, beträgt die Summe über die gewichtsprozentualen Anteile aller bevorzugten Ausführungsformen der in dem Basislack enthaltenen Polymere bevorzugt ebenfalls 2 bis 12 Gew.-% bezogen auf das Gesamtgewicht des pigmentierten wässrigen Basislacks. Besonders bevorzugt enthält der pigmentierte wässrige Basislack als in dem Basislack enthaltenen Polymere ausschließlich bevorzugte Ausführungsformen der in dem Basislack enthaltenen Polymere.

Als Beispiele für in diesem Sinne bevorzugte Ausführungsformen der in dem Basislack enthaltenen Polymere seien die folgenden besonders bevorzugten Ausführungsformen genannt:
a) In einer besonders bevorzugten Ausführungsform des in dem Basislack enthaltenen Polymers wird die Dimerfettsäure aus Linolen-, Linol- und/oder Ölsäure hergestellt, besteht zu mindestens 98 Gew.-% aus dimeren Molekülen, weniger als 1,5 Gew.-% aus trimeren Molekülen und zu weniger als 0,5 Gew.-% aus monomeren Molekülen und sonstigen Nebenprodukten und besitzt eine lodzahl von ≤ 10 g/100g.
b) In einer weiteren besonders bevorzugten Ausführungsform des in dem Basislack enthaltenen Polymers handelt es sich bei dem erfindungsgemäß einzusetzenden Polyether um Polypropylenglycol oder um Polytetrahydrofuran und er besitzt zudem ein zahlenmittleres Molekulargewicht von 800 bis 1200 g/mol.
c) In einer weiteren besonders bevorzugten Ausführungsform des in dem Basislack enthaltenen Polymers werden die Komponenten (a) und (b) in einem molaren Verhältnis von 0,9/2,1 bis 1,1/1,9 eingesetzt.
d) In einer weiteren besonders bevorzugten Ausführungsform des in dem Basislack enthaltenen Polymers besitzt dieses eine Säurezahl von < 5 mg KOH/g.
e) In einer weiteren besonders bevorzugten Ausführungsform des in dem Basislack enthaltenen Polymers besitzt dieses ein zahlenmittleres Molekulargewicht von 3000 bis 4000 g/mol.

Als weiteres Beispiel für in diesem Sinne bevorzugte Ausführungsformen der in dem Basislack enthaltenen Polymere seien jene genannt, welche alle die unter a) bis e) angegebenen Merkmale in Kombination realisieren.

Die erfindungsgemäß eingesetzten Basislacke enthalten farb- und/oder effektgebende Pigmente. Solche Farbpigmente und Effektpigmente sind dem Fachmann bekannt und werden beispielsweise in Römpp-Lexikon Lacke und Druckfarben, Georg Thieme Verlag, Stuttgart, New York, 1998, Seite 176 und 451, beschrieben. Der Anteil der Pigmente kann beispielsweise im Bereich von 1 bis 40 Gew.-%, bevorzugt 2 bis 30 Gew.-%, besonders bevorzugt 3 bis 25 Gew.-%, bezogen auf das Gesamtgewicht des pigmentierten wässrigen Basislacks, liegen.

Im Rahmen der vorliegenden Erfindung werden bevorzugt Basislacke eingesetzt, die als Bindemittel physikalisch, thermisch oder thermisch und mit aktinischer Strahlung härtbare Bindemittel enthalten.

Neben dem in dem Basislack enthaltenen Polymer enthalten die erfindungsgemäßen pigmentierten wässrigen Basislacke besonders bevorzugt mindestens ein Polyurethanharz. Derartige Polyurethanharz enthaltende Lacke können ebenfalls üblicherweise physikalisch, thermisch oder thermisch und mit aktinischer Strahlung gehärtet werden.

Im Rahmen der vorliegenden Erfindung bedeutet der Begriff "physikalische Härtung" die Bildung eines Films durch Abgabe von Lösemittel aus Polymerlösungen oder Polymerdispersionen. Üblicherweise sind hierfür keine Vernetzungsmittel notwendig.

Im Rahmen der vorliegenden Erfindung bedeutet der Begriff "thermische Härtung" die durch Wärme initiierte Vernetzung einer Lackschicht, bei der in dem zugrunde liegenden Lack entweder ein separat vorliegendes Vernetzungsmittel oder aber selbstvernetzende Bindemittel angewandt werden. Das Vernetzungsmittel enthält reaktive funktionelle Gruppen, die zu den in den Bindemitteln vorhandenen reaktiven funktionellen Gruppen komplementär sind. Üblicherweise wird dies von der Fachwelt als Fremdvernetzung bezeichnet. Sind die komplementären reaktiven funktionellen Gruppen oder autoreaktiven funktionellen Gruppen, d.h. Gruppen, die mit Gruppen derselben Art reagieren, bereits in den Bindemittelmolekülen vorhanden, liegen selbstvernetzende Bindemittel vor. Beispiele geeigneter komplementärer reaktiver funktioneller Gruppen und autoreaktiver funktioneller Gruppen sind aus der deutschen Patentanmeldung DE 199 30 665 A1, Seite 7, Zeile 28 bis Seite 9, Zeile 24 bekannt.

Im Rahmen der vorliegenden Erfindung ist unter aktinischer Strahlung elektromagnetische Strahlung wie nahes Infrarot (NIR), UV-Strahlung, insbesondere UV-Strahlung, und Korpuskularstrahlung wie Elektronenstrahlung zu verstehen. Die Härtung durch UV-Strahlung wird üblicherweise durch radikalische oder kationische Photoinitiatoren initiiert.

Werden die thermische Härtung und die Härtung mit aktinischem Licht gemeinsam angewandt, spricht man auch von _{"}Dual Cure".

In der vorliegenden Erfindung sind sowohl Basislacke bevorzugt, die physikalisch, als auch solche die thermisch oder thermisch und mit aktinischer Strahlung, also mittels _{"}Dual Cure", härtbar sind.

Als thermisch härtende Basislacke sind solche bevorzugt, die als Bindemittel ein Polyurethanharz und als Vernetzungsmittel ein Aminoplastharz oder ein blockiertes oder unblockiertes Polyisocyanat, bevorzugt ein Aminoplastharz, enthalten. Unter den Aminoplastharzen sind Melaminharze bevorzugt.

Das bevorzugt enthaltene Polyurethanharz kann ionisch und/oder nicht ionisch hydrophil stabilisiert sein. In bevorzugten Ausführungsformen der vorliegenden Erfindung ist das Polyurethanharz ionisch hydrophil stabilisiert. Die bevorzugten Polyurethanharze sind linear oder enthalten Verzweigungen. Besonders bevorzugt handelt es sich um ein Polyurethanharz, in dessen Gegenwart olefinisch ungesättigte Monomere polymerisiert wurden. Das Polyurethanharz (A) kann dabei neben dem aus der Polymerisation der olefinisch ungesättigten Monomere hervorgegangenen Polymer vorliegen ohne dass diese kovalent miteinander verbunden sind. Ebenso kann das Polyurethanharz (A) aber auch mit dem aus der Polymerisation der olefinisch ungesättigten Monomere hervorgegangenen Polymer kovalent verbunden sein. Bei den olefinisch ungesättigten Monomeren handelt es sich bevorzugt um Acrylat- und/oder Methacrylatgruppenhaltige Monomere. Ebenfalls bevorzugt ist, dass die Acrylat- und/oder Methacrylatgruppenhaltigen Monomere in Kombination mit weiteren olefinisch ungesättigten Verbindungen eingesetzt werden, welche keine Acrylat- oder Methacrylatgruppen enthalten. Besonders bevorzugt werden als olefinisch ungesättigte Monomere Acrylat- oder Methacrylatgruppen-haltige Monomere an das Polyurethanharz (A) gebunden, wodurch Polyurethan(meth)acrylate entstehen. Ganz besonders bevorzugt ist das Polyurethanharz ein Polyurethan(meth)acrylat. Das bevorzugt enthaltene Polyurethanharz ist physikalisch, thermisch oder thermisch und mit aktinischer Strahlung härtbar. Insbesondere ist es thermisch oder thermisch und mit aktinischer Strahlung härtbar. Besonders bevorzugt umfasst das Polyurethanharz reaktive funktionelle Gruppen, durch die eine Fremdvernetzung möglich ist.

Geeignete gesättigte oder ungesättigte Polyurethanharze werden beispielsweise beschrieben in
- der deutschen Patentanmeldung DE 199 14 896 A1, Spalte 1, Zeilen 29 bis 49 und Spalte 4, Zeile 23 bis Spalte 11, Zeile 5,
- der deutschen Patentanmeldung DE 199 48 004 A1, Seite 4, Zeile 19 bis Seite 13, Zeile 48,
- der europäischen Patentanmeldung EP 0 228 003 A1, Seite 3, Zeile 24 bis Seite 5, Zeile 40,
- der europäischen Patentanmeldung EP 0 634 431 A1, Seite 3, Zeile 38 bis Seite 8, Zeile 9, oder
- der internationalen Patentanmeldung WO 92/15405, Seite 2, Zeile 35 bis Seite 10, Zeile 32.

Für die Herstellung des Polyurethanharzes werden vorzugsweise die dem Fachmann bekannten aliphatischen, cycloaliphatischen, aliphatischcycloaliphatischen, aromatischen, aliphatisch-aromatischen und/oder cycloaliphatisch-aromatischen Polyisocyanate eingesetzt.

Als Alkohol-Komponente für die Herstellung der Polyurethanharze werden bevorzugt die dem Fachmann bekannten, gesättigten und ungesättigten höhermolekularen und niedermolekularen Polyole sowie gegebenenfalls auch Monoalkohole in untergeordneten Mengen eingesetzt. Als niedermolekulare Polyole werden insbesondere Diole und in untergeordneten Mengen Triole zur Einführung von Verzweigungen eingesetzt. Beispiele geeigneter höhermolekularer Polyole sind gesättigte oder olefinisch ungesättigte Polyesterpolyole und/oder Polyetherpolyole. Insbesondere werden als höhermolekulare Polyole Polyesterpolyole, insbesondere solche mit einem zahlenmittleren Molekulargewicht von 400 bis 5000 g/mol (gemessen mittels Gelpermeationschromatographie gegen einen Poly- methylmethacrylatstandard; als Eluent wird Tetrahydrofuran eingesetzt eingesetzt.

Zur hydrophilen Stabilisierung beziehungsweise zur Erhöhung der Dispergierbarkeit in wässrigem Medium kann das bevorzugt enthaltene Polyurethanharz bestimmte ionische Gruppen und/oder Gruppen, die in ionische Gruppen überführt werden können (potentiell ionische Gruppen), enthalten. Solche Polyurethanharze werden im Rahmen der vorliegenden Erfindung als ionisch hydrophil stabilisierte Polyurethanharze bezeichnet. Ebenfalls enthalten sein können nicht ionische hydrophil modifizierende Gruppen. Bevorzugt sind aber die ionisch hydrophil stabilisierten Polyurethane. Genauer handelt es sich bei den modifizierenden Gruppen entweder um
- funktionelle Gruppen, die durch Neutralisationsmittel und/oder Quaternisierungsmittel in Kationen überführt werden können, und/oder kationische Gruppen (kationische Modifizierung)
   oder
- funktionelle Gruppen, die durch Neutralisationsmittel in Anionen überführt werden können, und/oder anionische Gruppen (anionische Modifizierung)
   und/oder
- nicht ionische hydrophile Gruppen (nicht-ionische Modifizierung).

Wie der Fachmann weiß, handelt es sich bei den funktionellen Gruppen zur kationischen Modifizierung um beispielsweise primäre, sekundäre und/oder tertiäre Aminogruppen, sekundäre Sulfidgruppen und/oder tertiäre Phosphingruppen, insbesondere tertiäre Aminogruppen und sekundäre Sulfidgruppen (funktionelle Gruppen, die durch Neutralisationsmittel und/oder Quaternisierungsmittel in kationische Gruppen überführt werden können). Weiterhin zu nennen sind die aus den vorgenannten funktionellen Gruppen unter Einsatz von dem Fachmann bekannten Neutralisationsmitteln und/oder Quaternisierungsmitteln hergestellte kationische Gruppen wie primäre, sekundäre, tertiäre und/oder quaternäre Ammoniumgruppen, tertiäre Sulfoniumgruppen und/oder quaternäre Phosphoniumgruppen, insbesondere quaternäre Ammoniumgruppen und tertiäre Sulfoniumgruppen.

Bei den funktionellen Gruppen zur anionischen Modifizierung handelt es sich bekanntermaßen um beispielsweise Carbonsäure-, Sulfonsäure- und/oder Phosphonsäuregruppen, insbesondere Carbonsäuregruppen (funktionelle Gruppen, die durch Neutralisationsmittel in anionische Gruppen überführt werden können) sowie aus den vorgenannten funktionellen Gruppen unter Einsatz von dem Fachmann bekannten Neutralisationsmittel hergestellte anionische Gruppen wie Carboxylat-, Sulfonat- und/oder Phosphonatgruppen.

Bei den funktionellen Gruppen zur nicht-ionischen hydrophilen Modifizierung handelt es sich vorzugsweise um Poly(oxyalkylen)-Gruppen, insbesondere Poly(oxyethylen)-Gruppen.

Die ionisch hydrophilen Modifizierungen können durch Monomere, welche die (potentiell) ionischen Gruppen enthalten, in das Polyurethanharz eingeführt werden. Die nicht-ionischen Modifizierungen werden beispielsweise durch den Einbau von Poly(ethylen)oxid-Polymeren als laterale oder endständige Gruppen der Polyurethanmoleküle eingeführt. Die hydrophilen Modifizierungen werden beispielsweise über Verbindungen eingeführt, die mindestens eine gegenüber Isocyanatgruppen reaktive Gruppe, vorzugsweise mindestens eine Hydroxygruppe, enthalten. Zur Einführung der ionischen Modifizierung können Monomere eingesetzt werden, die neben den modifizierenden Gruppen mindestens eine Hydroxygruppe enthalten. Zur Einführung der nicht-ionischen Modifizierungen werden bevorzugt die dem Fachmann bekannten Polyetherdiole und/oder Alkoxypoly(oxyalkylen)alkohole eingesetzt.

Vorzugsweise kann es sich bei dem Polyurethanharz um ein Pfropfpolymer handeln. Insbesondere handelt es sich um ein mittels olefinisch ungesättigten Verbindungen, vorzugsweise olefinisch ungesättigten Monomeren, gepfropftes Polyurethanharz. In diesem Fall ist das Polyurethan also beispielsweise mit Seitengruppen und/oder Seitenketten gepfropft, die auf olefinisch ungesättigten Monomeren basieren. Insbesondere handelt es sich um Seitenketten, die auf Poly(meth)acrylaten basieren. Als Poly(meth)acrylate werden im Rahmen der vorliegenden Erfindung Polymere beziehungsweise polymere Reste bezeichnet, die Acrylat- und/oder Methacrylatgruppen-haltige Monomere umfassen, vorzugsweise aus Acrylat- und/oder Methacrylatgruppen-haltigen Monomeren bestehen. Unter Seitenketten, die auf Poly(meth)acrylaten basieren, sind Seitenketten zu verstehen, die bei der Pfropfpolymerisation unter Einsatz von (Meth)acrylatgruppen-haltigen Monomeren aufgebaut werden. Dabei werden bei der Pfropfpolymerisation vorzugsweise mehr als 50 mol-%, insbesondere mehr als 75 mol-%, insbesondere 100 mol.-%, bezogen auf die Gesamtmenge der bei der Pfropfpolymerisation eingesetzten Monomere, an (Meth)acrylatgruppenhaltigen Monomeren eingesetzt.

Die beschriebenen Seitenketten werden bevorzugt nach der Herstellung einer Polyurethanharz-Primärdispersion in das Polymer eingeführt. In diesem Fall kann das in der Primärdispersion vorliegende Polyurethanharz seiten- und/oder endständige olefinisch ungesättigte Gruppen enthalten, über die dann die Pfropfpolymerisation mit den olefinisch ungesättigten Verbindungen verläuft. Das zu pfropfende Polyurethanharz kann also ein ungesättigtes Polyurethanharz (A) sein. Bei der Pfropfpolymerisation handelt es sich dann um eine radikalische Polymerisation olefinisch ungesättigter Reaktionspartner. Möglich ist beispielsweise auch, dass die zur Pfropfpolymerisation eingesetzten olefinisch ungesättigten Verbindungen mindestens eine Hydroxygruppe enthalten. Dann kann auch zunächst eine Anbindung der olefinisch ungesättigten Verbindungen über diese Hydroxygruppen durch Reaktion mit freien Isocyanatgruppen des Polyurethanharzes erfolgen. Diese Anbindung findet anstelle oder neben der radikalischen Reaktion der olefinisch ungesättigten Verbindungen mit den gegebenenfalls vorhandenen seiten- und/oder endständigen olefinisch ungesättigten Gruppen des Polyurethanharzes statt. Danach folgt dann wieder die Pfropfpolymerisation über radikalische Polymerisation wie sie weiter oben beschrieben wurde. Erhalten werden jedenfalls mit olefinisch ungesättigten Verbindungen, vorzugsweise olefinisch ungesättigten Monomeren, gepfropfte Polyurethanharze.

Als olefinisch ungesättigte Verbindungen, mit denen das Polyurethanharz (A) bevorzugt gepfropft wird, können praktisch alle radikalisch polymerisierbaren, olefinisch ungesättigten und organischen Monomere eingesetzt werden, die dem Fachmann für diese Zwecke zur Verfügung stehen. Beispielhaft seien einige bevorzugte Monomerklassen genannt:
- Hydroxyalkylester der (Meth)acrylsäure oder anderer alpha, beta - ethylenisch ungesättigter Carbonsäuren,
- (Meth)acrylsäurealkylester und/oder -cycloalkylester mit bis zu 20 Kohlenstoffatomen im Alkylrest,
- Ethylenisch ungesättigte Monomere, enthaltend mindestens eine Säuregruppe, insbesondere genau eine Carboxylgruppe, wie beispielsweise (Meth)acrylsäure,
- Vinylester von in alpha-Stellung verzweigten Monocarbonsäuren mit 5 bis 18 Kohlenstoffatomen,
- Umsetzungsprodukte aus (Meth)acrylsäure mit dem Glycidylester einer in alpha-Stellung verzweigten Monocarbonsäure mit 5 bis 18 Kohlenstoffatomen,
- Weitere ethylenisch ungesättigte Monomere wie Olefine (beispielsweise Ethylen), (Meth)acrylsäureamide, vinylaromatische Kohlenwasserstoffe (beispielsweise Styrol), Vinylverbindungen wie Vinylchlorid und/oder Vinylether wie Ethylvinylether.

Bevorzugt werden (Meth)acrylatgruppen-haltige Monomere eingesetzt, sodass das es sich bei den aufgepfropften Seitenketten um Poly(meth)acrylat-basierende Seitenketten handelt.

Die seiten- und/oder endständigen olefinisch ungesättigten Gruppen in dem Polyurethanharz, über die die Pfropfpolymerisation mit den olefinisch ungesättigten Verbindungen verlaufen kann, werden bevorzugt über bestimmte Monomere in das Polyurethanharz eingeführt. Diese bestimmten Monomere enthalten neben einer olefinisch ungesättigten Gruppe beispielsweise noch mindestens eine gegenüber Isocyanatgruppen reaktive Gruppe. Bevorzugt sind Hydroxygruppen sowie primäre und sekundäre Aminogruppen. Insbesondere bevorzugt sind Hydroxygruppen.

Natürlich können die beschriebenen Monomere, durch welche die seiten- und/oder endständigen olefinisch ungesättigten Gruppen in das Polyurethanharz eingeführt werden können, auch zum Einsatz kommen, ohne dass das Polyurethanharz danach noch zusätzlich mit olefinisch ungesättigten Verbindungen gepfropft wird. Bevorzugt ist allerdings, dass das Polyurethanharz mit olefinisch ungesättigten Verbindungen gepfropft ist.

Das bevorzugt enthaltene Polyurethanharz kann ein selbst- und/oder fremdvernetzendes Bindemittel sein. Bevorzugt umfasst das Polyurethanharz reaktive funktionelle Gruppen, durch die eine Fremdvernetzung möglich ist. In diesem Fall ist in dem pigmentierten wässrigen Basislack bevorzugt mindestens ein Vernetzungsmittel enthalten. Insbesondere handelt es sich bei den reaktiven funktionellen Gruppen, durch die eine Fremdvernetzung möglich ist, um Hydroxygruppen. Besonders vorteilhaft sind im Rahmen des erfindungsgemäßen Verfahrens polyhydroxyfunktionelle Polyurethanharze einsetzbar. Dies bedeutet, dass das Polyurethanharz im Mittel mehr als eine Hydroxygruppe pro Molekül enthält.

Die Herstellung des Polyurethanharzes erfolgt nach den üblichen Methoden der Polymerchemie. Gemeint sind dabei beispielsweise die Polymerisation von Polyisocyanaten und Polyolen zu Polyurethanen und die bevorzugt dann folgende Pfropfpolymerisation mit olefinisch ungesättigten Verbindungen. Diese Methoden sind dem Fachmann bekannt und können individuell angepasst werden. Beispielhafte Herstellungsverfahren und Reaktionsbedingungen sind der europäischen Patentschrift EP 0521 928 B1, Seite 2, Zeile 57 bis Seite 8, Zeile 16 zu entnehmen.

Unter filmbildendem Festkörper ist der nichtflüchtige Gewichtsanteil des Basislacks ohne Pigmente und gegebenenfalls Füllstoffe zu verstehen. Der filmbildende Festkörper ist folgendermaßen bestimmbar: Eine Probe des pigmentierten wässrigen Basislacks (etwa 1 g) wird mit der 50 bis 100-fachen Menge Tetrahydrofuran versetzt und dann etwa 10 Minuten gerührt. Anschließend werden die unlöslichen Pigmente und gegebenenfalls Füllstoffe abfiltriert, der Rückstand mit wenig THF nachgespült und von dem so erhaltenen Filtrat das THF am Rotationsverdampfer entfernt. Der Rückstand des Filtrats wird zwei Stunden bei 120°C getrocknet und der dabei resultierende filmbildende Festkörper ausgewogen.

Der Polyurethanharzgehalt liegt bevorzugt zwischen 5 und 80 Gew.-%, besonders bevorzugt zwischen 8 und 70 Gew.-% und besonders bevorzugt zwischen 10 und 60 Gew.-%, jeweils bezogen auf den filmbildenden Festkörper des Basislacks.

Das bevorzugt enthaltene Polyurethanharz besitzt vorzugsweise ein zahlenmittleres Molekulargewicht von 200 bis 30000 g/mol, bevorzugt von 2000 bis 20000 g/mol (gemessen mittels Gelpermeationschromatographie gegen einen Polymethylmethacrylatstandard; als Eluent wird Tetrahydrofuran eingesetzt). Es besitzt zudem beispielsweise eine Hydroxylzahl von 0 bis 250 mg KOH/g, insbesondere aber von 20 bis 150 mg KOH/g. Die Säurezahl des Polyurethanharzes liegt bevorzugt bei 5 bis 200 mg KOH/g, insbesondere bei 10 bis 40 mg KOH/g. Die Hydroxylzahl wird nach DIN / ISO 4629, die Säurezahl gemäß DIN 53402 bestimmt.

Der einzusetzende pigmentierte wässrige Basislack kann zudem mindestens einen Polyester, insbesondere einen Polyester mit einem zahlenmittleren Molekulargewicht von 400 bis 5000 g/mol (gemessen mittels Gelpermeationschromatographie gegen einen Polymethylmethacrylatstandard; als Eluat wird Tetrahydrofuran eingesetzt) enthalten Entsprechende Polyester werden in DE 4009858 in Spalte 6, Zeile 53 bis Spalte 7, Zeile 61 und Spalte 10, Zeile 24 bis Spalte 13, Zeile 3 beschrieben.

Bevorzugt ist zudem ein Verdicker enthalten. Als Verdicker eignen sich anorganische Verdicker aus der Gruppe der Schichtsilikate. Neben den anorganischen Verdickern können jedoch auch ein oder mehrere organische Verdicker eingesetzt werden. Diese werden vorzugsweise gewählt aus der Gruppe bestehend aus (Meth)acrylsäure-(Meth)acrylat-Copolymerisat-Verdickern, wie beispielsweise dem Handelsprodukt Viscalex HV30 (Ciba, BASF) und Polyurethanverdickern, wie beispielsweise dem Handelsprodukt DSX ^{®} 1550 der Firma Cognis. Die eingesetzten Verdicker sind von den eingesetzten Bindemitteln verschieden.

Darüber hinaus kann der pigmentierte wässrige Basislack noch mindestens einen Zusatzstoff enthalten. Beispiele für derartige Zusatzstoffe sind rückstandsfrei oder im Wesentlichen rückstandsfrei thermisch zersetzbare Salze, von Polyurethanharzen verschiedene physikalisch, thermisch und/oder mit aktinischer Strahlung härtbare Harze als Bindemittel, weitere Vernetzungsmittel, organische Lösemittel, Reaktivverdünner, transparente Pigmente, Füllstoffe, molekulardispers lösliche Farbstoffe, Nanopartikel, Lichtschutzmittel, Antioxidantien, Entlüftungsmittel, Emulgatoren, Slipadditive, Polymerisationsinhibitoren, Initiatoren für radikalische Polymerisationen, Haftvermittler, Verlaufsmittel, filmbildende Hilfsmittel, Sag-Control-Agents (SCAs), Flammschutzmittel, Korrosionsinhibitoren, Wachse, Sikkative, Biozide und Mattierungsmittel.

Geeignete Zusatzstoffe der vorstehend genannten Art sind beispielsweise aus
- der deutschen Patentanmeldung DE 199 48 004 A1, Seite 14, Zeile 4, bis Seite 17, Zeile 5,
- dem deutschen Patent DE 100 43 405 C1, Spalte 5, Absätze [0031] bis [0033],
bekannt. Sie werden in den üblichen und bekannten Mengen eingesetzt.

Der Festkörpergehalt der erfindungsgemäß eingesetzten Basislacke kann je nach den Erfordernissen des Einzelfalls variieren. In erster Linie richtet sich der Festkörpergehalt nach der für die Applikation, insbesondere Spritzapplikation, erforderlichen Viskosität, so dass er vom Fachmann aufgrund seines allgemeinen Fachwissens gegebenenfalls unter Zuhilfenahme weniger orientierender Versuche eingestellt werden kann.

Vorzugsweise liegt der Festkörpergehalt der Basislacke bei 5 bis 70 Gew.-%, besonders bevorzugt bei 8 bis 60 Gew.-% und ganz besonders bevorzugt bei 12 bis 55 Gew.-%.

Unter Festkörpergehalt ist derjenige Gewichtsanteil zu versehen, der unter festgelegten Bedingungen beim Eindampfen als Rückstand verbleibt. In der vorliegenden Anmeldung wurde der Festkörper nach DIN EN ISO 3251 bestimmt. Dazu wird der Beschichtungsstoff für 60 Minuten bei 130°C eingedampft.

Die Herstellung der erfindungsgemäß eingesetzten Basislacke kann unter Einsatz der für die Herstellung von Basislacken üblichen und bekannten Mischverfahren und Mischaggregaten erfolgen.

Ein weiterer Aspekt der vorliegenden Erfindung ist ein Verfahren zur Herstellung einer mehrschichtigen Lackierung, bei dem
(1) ein pigmentierter wässriger Basislack auf ein Substrat aufgebracht wird,
(2) aus dem in Stufe (1) aufgebrachten Lack ein Polymerfilm gebildet wird,
(3) auf die so erhaltene Basislackschicht ein Klarlack aufgebracht wird und anschließend
(4) die Basislackschicht zusammen mit der Klarlackschicht gehärtet wird,
welches dadurch gekennzeichnet ist, dass in Stufe (1) ein erfindungsgemäßer pigmentierter wässriger Basislack eingesetzt wird, welcher das im Zusammenhang mit dem pigmentierten wässrigen Basislack beschriebene Polymer enthält. Alle vorstehend genannten Ausführungen hinsichtlich des erfindungsgemäßen pigmentierten wässrigen Basislacks gelten auch für die erfindungsgemäße Verwendung. Dies gilt insbesondere auch für alle bevorzugten, besonders bevorzugten und ganz besonders bevorzugten Merkmale.

Das besagte Verfahren wird bevorzugt zur Herstellung von farbgebenden Mehrschichtlackierungen, effektgebenden Lackierungen und farb- und effektgebenden Lackierungen eingesetzt.

Die Applikation des erfindungsgemäß eingesetzten pigmentierten wässrigen Basislacks erfolgt üblicherweise auf mit Füller oder Grundierfüller vorbehandelte Metall- oder Kunststoffsubstrate. Gegebenenfalls kann der besagte Basislack auch direkt auf dem Kunststoffuntergrund aufgebracht werden.

Soll ein Metallsubstrat beschichtet werden, so wir dieses vor der Applikation des Füllers oder Grundierfüllers bevorzugt noch mit einer Elektrotauchlackierung beschichtet.

Wird ein Kunststoffsubstrat beschichtet, so wir dieses vor der Applikation des Füllers oder Grundierfüllers bevorzugt noch vorbehandelt. Die hierzu am häufigsten angewendeten Verfahren sind das Beflammen, die Plasmabehandlung und die Corona-Entladung. Bevorzugt wird das Beflammen eingesetzt.

Die Applikation des erfindungsgemäß eingesetzten pigmentierten wässrigen Basislacks auf ein Metallsubstrat kann in den im Rahmen der Automobilindustrie üblichen Schichtdicken im Bereich von beispielsweise 5 bis 100 Mikrometer, bevorzugt 5 bis 60 Mikrometer erfolgen. Dabei werden Spritzapplikationsmethoden angewandt, wie zum Beispiel Druckluftspritzen, Airless-Spritzen, Hochrotation, elektrostatischer Sprühauftrag (ESTA), gegebenenfalls verbunden mit Heissspritzapplikation wie zum Beispiel Hot-Air-Heissspritzen.

Nach der Applikation des pigmentierten wässrigen Basislacks kann dieser nach bekannten Methoden getrocknet werden. Beispielsweise können (1K)-Basislacke bei Raumtemperatur für 1 bis 60 Minuten abgelüftet werden und darauf folgend bevorzugt bei gegebenenfalls leicht erhöhten Temperaturen von 30 bis 80°C getrocknet werden. Unter Ablüften und Trocknung ist im Rahmen der vorliegenden Erfindung ein Abdunsten von organischen Lösemitteln und/oder Wasser zu verstehen, wodurch der Lack trockener, aber noch nicht gehärtet wird. Beziehungsweise noch kein vollständig vernetzter Lackfilm gebildet wird.

Dann wird ein handelsüblicher Klarlack nach ebenfalls gängigen Methoden appliziert, wobei die Schichtdicken wiederum in den gängigen Bereichen, beispielsweise 5 bis 100 Mikrometer, liegen.

Nach der Applikation des Klarlacks kann dieser bei Raumtemperatur für beispielsweise 1 bis 60 Minuten abgelüftet und gegebenenfalls getrocknet werden. Dann wird der Klarlack zusammen mit dem applizierten pigmentierten Basislack gehärtet. Dabei finden beispielsweise Vernetzungsreaktionen statt, wodurch eine erfindungsgemäße farb- und/oder effektgebende mehrschichtige Lackierung auf einem Substrat hergestellt wird. Die Härtung erfolgt bevorzugt thermisch bei Temperaturen von 60 bis 200°C. Als thermisch härtende Basislacke sind solche bevorzugt, die als zusätzliches Bindemittel ein Polyurethanharz und als Vernetzungsmittel ein Aminoplastharz oder ein blockiertes oder unblockiertes Polyisocyanat, bevorzugt ein Aminoplasthatz, enthalten. Unter den Aminoplastharzen sind Melaminharze bevorzugt.

Die Beschichtung von Kunststoffsubstraten erfolgt im Grunde genommen analog zu der von Metallsubstraten. Allerdings wird hier im Allgemeinen bei deutlich niedrigeren Temperaturen von 30 bis 90 °C gehärtet. Bevorzugt ist daher der Einsatz von Zweikomponentenklarlacken. Ferner werden bevorzugt Basislacke eingesetzt, welche als Bindemittel ein Polyurethanharz aber keinen Vernetzer enthalten.

Mit Hilfe des erfindungsgemäßen Verfahrens können metallische und nichtmetallische Substrate, insbesondere Kunststoffsubstrate, vorzugsweise Automobilkarosserien oder Teile davon lackiert werden.

Das erfindungsgemäße Verfahren kann ferner zur Doppellackierung in der OEM-Lackierung eingesetzt werden. Darunter ist zu verstehen, dass ein Substrat, welches mit Hilfe des erfindungsgemäßen Verfahrens beschichtet wurde, ein zweites Mal, ebenfalls mit Hilfe des erfindungsgemäßen Verfahrens, lackiert wird.

Die Erfindung betrifft ferner Mehrschichtlackierungen, welche nach dem oben beschriebenen Verfahren herstellbar sind. Diese Mehrschichtlackierungen sollen im Folgenden als erfindungsgemäße Mehrschichtlackierungen bezeichnet werden.

Alle vorstehend genannten Ausführungen hinsichtlich des erfindungsgemäßen pigmentierten wässrigen Basislacks und des erfindungsgemäßen Verfahrens gelten entsprechend auch für die besagte Mehrschichtlackierung. Dies gilt insbesondere auch für alle bevorzugten, besonders bevorzugten und ganz besonders bevorzugten Merkmale.

Bevorzugt handelt es sich bei den erfindungsgemäßen Mehrschichtlackierungen um farbgebende Mehrschichtlackierungen, effektgebenden Lackierungen und farb- und effektgebenden Lackierungen.

Ein weiterer Aspekt der Erfindung betrifft das erfindungsgemäße Verfahren, wobei es sich bei dem besagten Substrat aus Stufe (1) um eine Mehrschichtlackierung handelt, welche Fehlstellen besitzt.

Das erfindungsgemäße Verfahren eignet sich demnach zur Ausbesserung von Fehlstellen auf Mehrschichtlackierungen. Als Fehlstellen beziehungsweise Filmfehler werden im Allgemeinen Störungen an und in der Beschichtung, die meist nach ihrer Form oder ihrem Aussehen benannt werden, bezeichnet. Dem Fachmann ist eine Vielzahl von möglichen Arten von solchen Filmfehlern bekannt. Diese werden beispielsweise in Römpp-Lexikon Lacke und Druckfarben, Georg Thieme Verlag, Stuttgart, New York, 1998, Seite 235,"Filmfehler" beschrieben.

Die mit Hilfe des erfindungsgemäßen Verfahrens hergestellten Mehrschichtlackierungen können ebenfalls solche Fehlstellen aufweisen. In einer bevorzugten Ausführungsform des erfindungsgemäßen Verfahrens handelt es sich bei dem Substrat aus Stufe (1) daher um eine erfindungsgemäße Mehrschichtlackierung, welche Fehlstellen aufweist.

Diese Mehrschichtlackierungen werden bevorzugt auf Automobilkarossen oder Teilen davon mit Hilfe des oben bezeichneten erfindungsgemäßen Verfahrens im Rahmen der Automobilserienlackierung hergestellt. Treten solche Fehlstellen direkt nach erfolgter OEM-Lackierung auf, so werden diese direkt ausgebessert. Man spricht daher auch von OEM-Automobilreparaturlackierung. Sind nur kleine Fehlstellen auszubessern, so wird nicht die ganze Karosse (Doppellackierung), sondern nur der sogenannte _{"}Spot" repariert. Dieser Prozess wird _{"}Spot Repair" genannt. Besonders bevorzugt ist daher der Einsatz des erfindungsgemäßen Verfahrens zum Ausbessern von Fehlstellen auf erfindungsgemäßen Mehrschichtlackierungen in der OEM-Automobilreparaturlackierung.

Damit die ausgebesserte Stelle sich farblich nicht vom Rest der Originallackierung unterscheidet, ist es bevorzugt, dass der in Stufe (1) des erfindungsgemäßen Verfahrens zur Ausbesserung von Fehlstellen eingesetzte wässrige Basislack derselbe ist, wie der, welcher im erfindungsgemäßen Verfahren zur Herstellung der erfindungsgemäßen mehrschichtigen Lackierung eingesetzt wird.

Die vorstehend genannten Ausführungen bezüglich des erfindungsgemäßen wässrigen pigmentierten Basislacks gelten somit auch für den in Rede stehenden Einsatz des erfindungsgemäßen Verfahrens zum Ausbessern von Fehlstellen auf einer mehrschichtigen Lackierung. Dies gilt insbesondere auch für alle genannten bevorzugten, besonders bevorzugten und ganz besonders bevorzugten Merkmale. Es ist weiterhin bevorzugt, dass es sich bei den auszubessernden, erfindungsgemäßen Mehrschichtlackierungen um farbgebende Mehrschichtlackierungen, effektgebenden Lackierungen und farb- und effektgebenden Lackierungen handelt.

Die oben beschriebenen Fehlstellen auf der erfindungsgemäßen Mehrschichtlackierung lassen sich mit Hilfe des vorstehend beschriebenen erfindungsgemäßen Verfahrens ausbessern. Hierzu kann die auszubessernde Oberfläche der Mehrschichtlackierung zunächst angeschliffen werden. Anschließend erfolgt die Applikation des pigmentierten wässrigen Basislacks auf die Fehlstelle in der Originallackierung durch pneumatische Zerstäubung. Nach der Applikation des pigmentierten wässrigen Basislacks kann dieser nach bekannten Methoden getrocknet werden. Beispielsweise kann der Basislack bei Raumtemperatur für 1 bis 60 Minuten getrocknet werden und darauf folgend bei gegebenenfalls leicht erhöhten Temperaturen von 30 bis 80°C getrocknet werden. Unter Ablüften und Trocknung ist im Rahmen der vorliegenden Erfindung ein Abdunsten von organischen Lösemitteln und/oder Wasser zu verstehen, wodurch der Lack noch nicht vollständig gehärtet wird. Im Rahmen der vorliegenden Erfindung ist es bevorzugt, dass der Basislack als Bindemittel ein Polyurethanharz und als Vernetzungsmittel ein Aminoplastharz, bevorzugt ein Melaminharz, enthält.

Anschließend wird ein handelsüblicher Klarlack nach ebenfalls gängigen Methoden appliziert. Nach der Applikation des Klarlacks kann dieser bei Raumtemperatur für beispielsweise 1 bis 60 Minuten abgelüftet und gegebenenfalls getrocknet werden. Dann wird der Klarlack zusammen mit dem applizierten pigmentierten Basislack gehärtet.

Beim so genannten Niedrigtemperatureinbrennen erfolgt die Härtung vorzugsweise bei Temperaturen von 20 bis 90°C. Hier werden bevorzugt Zweikomponentenklarlacke eingesetzt. Wird, wie oben beschrieben, als weiteres Bindemittel ein Polyurethanharz und als Vernetzungsmittel ein Aminoplastharz eingesetzt, so kommt es bei diesen Temperaturen in der Basislackschicht nur zu einer geringen Vernetzung durch das Aminoplastharz. Neben seiner Funktion als Härter dient das Aminoplastharz hierbei auch der Plastifizierung und kann die Pigmentbenetzung unterstützen. Neben den Aminoplastharzen können auch unblockierte Isocyanate eingesetzt werden. Diese vernetzen je nach Art des eingesetzten Isocyanats schon bei Temperaturen ab 20 °C.

Beim sogenannten Hochtemperatureinbrennen erfolgt die Härtung vorzugsweise bei Temperaturen von 130 bis 150°C. Hier werden sowohl Einkomponenten- als auch Zweikomponentenklarlacke eingesetzt. Wird, wie oben beschrieben, als weiteres Bindemittel ein Polyurethanharz und als Vernetzungsmittel ein Aminoplastharz eingesetzt, so kommt es bei diesen Temperaturen in der Basislackschicht zu einer Vernetzung durch das Aminoplastharz.

Ein weiterer Aspekt der vorliegenden Erfindung ist die Verwendung eines Polymers, herstellbar durch Umsetzung von
(a) Dimerfettsäuren mit
(b) mindestens einem Polyether der allgemeinen Strukturformel (I) 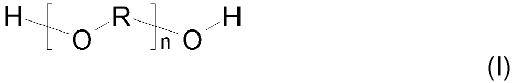 wobei es sich bei R um einen C₃-C₆-Alkylenrest handelt und n entsprechend so gewählt ist, dass der besagte Polyether ein zahlenmittleres Molekulargewicht von 450 bis 2200 g/mol besitzt, die Komponenten (a) und (b) in einem molaren Verhältnis von 0,7/2,3 bis 1,3/1,7 eingesetzt werden und das resultierende Polymer ein zahlenmittleres Molekulargewicht von 1500 bis 5000 g/mol und eine Säurezahl < 10 mg KOH/g besitzt,
in pigmentierten wässrigen Basislacken zur Haftungsverbesserung. Hierunter ist die Haftungsverbesserung gegenüber solchen pigmentierten wässrigen Basislacken zu verstehen, die kein derartiges Polymer enthalten.

Das Polymer kann zur Haftungsverbesserung bei der Lackierung von Metall- und Kunststoffsubstraten eingesetzt werden. Ebenso lässt es sich in der Autoreparaturlackierung einsetzen. Unter Autoreparaturlackierung ist sowohl die OEM-Automobilreparaturlackierung als auch die Automobilreparaturlackierung gemeint, welche beispielsweise in einer Werkstatt stattfindet.

Werden die besagten pigmentierten wässrigen Basislacke bei der Lackierung von Metall- und Kunststoffsubstraten eingesetzt, so führt der Einsatz des Polymers insbesondere zu einer Verbesserung der Haftung zwischen der Basislack- und der unmittelbar an diese angrenzende Klarlackschicht. Das Polymer wird daher bevorzugt zur Haftungsverbesserung zwischen Basislack- und Klarlackschicht bei der Lackierung von Metall- und Kunststoffsubstraten verwendet.

Werden die besagten pigmentierten wässrigen Basislacke bei der Autoreparaturlackierung eingesetzt, so führt der Einsatz des Polymers insbesondere zu einer Haftungsverbesserung zwischen Basislack und Erstlackierung. Das Polymer wird daher ebenso bevorzugt zur Verbesserung der Haftung zwischen Basislack- und Erstlackierung in der Autoreparaturlackierung, besonders bevorzugt in der OEM-Automobilreparaturlackierung verwendet.

Die Haftungsproblematik ist insbesondere dann eklatant, wenn die beschichteten Substrate der Witterung ausgesetzt sind. Entsprechende Witterungsverhältnisse lassen sich durch eine sogenannte Schwitzwasserlagerung simulieren. Der Begriff Schwitzwasserlagerung bezeichnet die Lagerung von beschichteten Substraten in einer Klimakammer nach Prüfklima CH nach DIN EN ISO 6270-2:2005-09.

Die Polymere werden daher insbesondere auch verwendet, um die Haftung nach einer Schwitzwasserlagerung zu verbessern. Die Haftung wird bevorzugt mittels Dampfstrahltest nach Prüfverfahren A der DIN 55662:2009-12 untersucht.

Wenn beschichtete Substrate der Witterung ausgesetzt sind, dann manifestiert sich eine schlechte Haftung insbesondere auch im Auftreten von Blasen und Quellungen. Die Polymere werden daher insbesondere auch verwendet, um das Auftreten von Blasen und Quellungen zu reduzieren oder zu verhindern. Das Vorliegen von Blasen und Quellungen kann dabei visuell begutachtet werden.

Im Folgenden wird die Erfindung anhand von Beispielen erläutert.

### Beispiele

Die eingesetzte Dimerfettsäure enthält weniger als 1,5 Gew.-% trimere Moleküle, 98 Gew.-% dimere Moleküle und eine lodzahl von < 10 g/100g. Sie wird auf der Basis von Linolen-, Linol- und Ölsäure hergestellt.
**Polyester 1 (P1):**
   Hergestellt gemäß Beispiel D, Spalte 16, Z. 37 bis 59 der DE 4009858 A.
**Polyester 2 (P2):**
   Hergestellt gemäß Beispiel 5, S. 18, Abschnitt 150, DE 102009018249 A1.

**Erfindungsgemäßes Bindemittel 1 (BE1):**
   In einem 4 I Edelstahlreaktor, ausgestattet mit Ankerrührer, Thermometer, Kühler, Thermometer zur Kopftemperaturmessung und Wasserabscheider wurden 2 mol PolyTHF1000, 579,3 g Dimerfettsäure (1mol) und 51 g Cyclohexan in Anwesenheit von 2,1 g Di-n-butylzinnoxid (Axion^{®} CS 2455, Fa. Chemtura)auf 100°C aufgeheizt. Es wurde langsam weitergeheizt bis zum Einsetzen der Kondensation. Bei einer maximalen Kopftemperatur von 85°C wurde dann schrittweise bis auf 220°C weitergeheizt. Der Reaktionsfortschritt wurde über die Bestimmung der Säurezahl verfolgt. Nach Erreichen einer Säurezahl von ≤ 3 mg KOH/g wurde noch vorhandenes Cyclohexan unter Vakuum abdestilliert. Man erhielt ein zähflüssiges Harz.
   Kondensatmenge (Wasser): 34,9 g
   Säurezahl: 2,7 mg KOH / g
   Feststoffgehalt (60 min bei 130°C): 100,0 %
   Molekulargewicht (Kalibrierung: PMMA-Standards):
      Mn: 3900 g/mol
      Mw: 7200 g/mol
      Viskosität: 5549 mPas,
   (gemessen bei 23°C mit einem Rotationsviskosimeter der Fa. Brookfield, Typ CAP 2000+, Spindel 3, Scherrate: 1333 s⁻¹)
**Erfindungsgemäßes Bindemittel 2 (BE2):**
   Analog zur Synthese des Bindemittels BE1 wurden 2 mol Polypropylenglykol mit einem mittleren Molekulargewicht von 900g/mol (Pluriol P900 BASF SE) und 1 mol Dimerfettsäure in Anwesenheit von 1,9 g Di-n-butylzinnoxid (Axion^{®} CS 2455, Fa. Chemtura) verestert. Man erhielt ein zähflüssiges Harz.
   Kondensatmenge (Wasser): 35,2 g
   Säurezahl: 0,3 mg KOH / g
   Feststoffgehalt (60 min bei 130°C): 100,0 %
   Molekulargewicht (Kalibrierung: PMMA-Standards):
      Mn: 3400 g/mol
      Mw: 7000 g/mol
   Viskosität: 2003 mPas, (gemessen bei 23°C mit einem Rotationsviskosimeter der Fa. Brookfield, Typ CAP 2000+, Spindel 3, Scherrate: 1333 s⁻¹)
**Nichterfindungsgemäßes Bindemittel 1 (BV1)**
   Analog zum obigem Versuch wurden 2 mol Dimerfettsäure und 1 mol PolyTHF1000 in Anwesenheit von 1,7 g Di-n-butylzinnoxid (Axion^{®} CS 2455, Fa. Chemtura) verestert. Man erhielt ein zähflüssiges Harz.
   Kondensatmenge (Wasser): 34,7 g
   Säurezahl: 54,6 mg KOH / g
   Feststoffgehalt (60 min bei 130°C): 100,0%
   Molekulargewicht (Kalibrierung: PMMA-Standards):
      Mn: 2800 g/mol
      Mw: 8100 g/mol
      Viskosität: 19793 mPas,
   (gemessen bei 23°C mit einem Rotationsviskosimeter der Fa. Brookfield, Typ CAP 2000+, Spindel 3, Scherrate: 307 s⁻¹)
**Nichterfindungsgemäßes Bindemittel 2 (BV2)**
   Analog zum obigem Versuch wurden 1 mol Polypropylenglykol mit einem mittleren Molekulargewicht von 900g/mol (Pluriol P900 BASF SE) und 2 mol Dimerfettsäure in Anwesenheit von 1,6 g Di-n-butylzinnoxid (Axion^{®} CS 2455, Fa. Chemtura) verestert. Man erhielt ein zähflüssiges Harz.
   Kondensatmenge (Wasser): 34,6 g
   Säurezahl: 57,2 mg KOH / g
   Feststoffgehalt (60 min bei 130°C): 100,0%
   Molekulargewicht (Kalibrierung: PMMA-Standards):
      Mn: 2400 g/mol
      Mw: 5800 g/mol
   Viskosität: 7790 mPas, (gemessen bei 23°C mit einem Rotationsviskosimeter der Fa. Brookfield, Typ CAP 2000+, Spindel 3, Scherrate: 507 s⁻¹)

### Beispiele für Lackformulierungen

### 1. Herstellung eines silbernen Wasserbasislacks 1

Die in der Tabelle A unter "wässrige Phase" aufgeführten Komponenten wurden in der angegebenen Reihenfolge zu einer wässrigen Mischung zusammengerührt. Im nächsten Schritt wurde aus den unter "organische Phase" aufgeführten Komponenten eine organische Mischung hergestellt. Die organische Mischung wurde zur wässrigen Mischung hinzugegeben. Sodann wurde 10 Minuten lang gerührt und mit Hilfe von deionisiertem Wasser und Dimethylethanolamin auf einen pH Wert von 8 und eine Spritzviskosität von 58 mPas bei einer Scherbelastung von 1000 s⁻¹, gemessen mit einem Rotations-Viskosimeter (Gerät Rheomat RM 180 der Firma Mettler-Toledo) bei 23°C, eingestellt.

**Tabelle A:**

| Komponente | Gewichtsteile |
|---|---|
| **Wässrige Phase** | |
| 3%ige Na-Mg-Schichtsilikatlösung | 26 |
| Deionisiertes Wasser | 13,6 |
| Butylglykol | 2,8 |
| Polyurethanmodifiziertes Polyacrylat; hergestellt gemäß S. 7, Z. 55 bis S.8, Z. 23 der DE 4437535 A | 4,5 |
| 50 Gew.-%ige Lösung DSX 1550 (BASF) Rheologiemittel | 0,6 |
| P1 | 3,2 |
| Tensid S (BASF) | 0,3 |
| Melaminformaldehydharz (Cymel 203 von Cytec) | 4,1 |
| 10%iges Dimethylethanolamin in Wasser | 0,3 |
| Pfropfmischpolymerisat auf Polyurethanbasis; hergestellt gemäß S. 19, Z. 44 bis S. 20, Z. 21 der DE 19948004 A | 20,4 |
| Tensid S (BASF) | 1,6 |
| 3 Gew.-%ige wässrige Viscalex HV 30 Lösung; Rheologiemittel, erhältlich von BASF | 3,9 |

| **Organische Phase** | |
|---|---|
| Mischung zweier handelsüblicher Aluminiumpigmente, erhältlich von Firma Altana-Eckart | 6,2 |
| Butylglykol | 7,5 |
| P1 | 5 |

**Wasserbasislack E1:**
Zur Herstellung des erfindungsgemäßen Wasserbasislacks E1 wurde ein Lack analog der Herstellung des Wasserbasislacks 1 hergestellt, wobei anstelle des Polyesters P1 sowohl in der wässrigen Phase als auch in der organischen Phase BE1 eingesetzt wurde.
**Wasserbasislack E2:**
Zur Herstellung des nicht erfindungsgemäßen Wasserbasislacks E2 wurde ein Lack analog der Herstellung des Wasserbasislacks 1 hergestellt, wobei anstelle des Polyesters P1 sowohl in der wässrigen Phase als auch in der organischen Phase BV1 eingesetzt wurde.
**Wasserbasislack E3:**
Zur Herstellung des erfindungsgemäßen Wasserbasislacks E3 wurde ein Lack analog der Herstellung des Wasserbasislacks 1 hergestellt, wobei anstelle des Polyesters P1 sowohl in der wässrigen Phase als auch in der organischen Phase BE2 eingesetzt wurde.
**Wasserbasislack E4:**
Zur Herstellung des nicht erfindungsgemäßen Wasserbasislacks E4 wurde ein Lack analog der Herstellung des Wasserbasislacks 1 hergestellt, wobei anstelle des Polyesters P1 sowohl in der wässrigen Phase als auch in der organischen Phase BV2 eingesetzt wurde.

**Tabelle 1: Zusammensetzungen der Wasserbasislacke 1 und E1 bis E4**

| **WBL** | **[Gew.-%]** | **Polymer** |
|---|---|---|
| 1 | 4,92 | P1 |
| E1 | 4,92 | BE1 |
| E2 | 4,92 | BV1 |
| E3 | 4,92 | BE2 |
| E4 | 4,92 | BV2 |

Die Gewichtsprozentangaben in Tabelle 1 beziehen sich auf das Gesamtgewicht des Wasserbasislacks.

### Vergleich zwischen Wasserbasislack 1 und den Wasserbasislacken E1 bis E4

Zur Bestimmung der Stabilität gegen das Auftreten von Blasen und Quellungen nach Schwitzwasserlagerung wurden die Mehrschichtlackierungen nach der folgenden allgemeinen Vorschrift hergestellt:
Ein mit einer Standard-KTL (Cathoguard^{®} 800 der Firma BASF Coatings GmbH) beschichtetes Stahlblech der Abmessungen 10 x 20 cm wurde mit einem Standard-Füller (ALG 670173 - Füller mittelgrau der Firma Hemmelrath) beschichtet. Nach Zwischentrocknen des wässrigen Füllers über einen Zeitraum von 10 Minuten bei 80°C wurde der Füller bei einer Temperatur von 190°C über einen Zeitraum von 30 Minuten eingebrannt.

Der jeweilige Wasserbasislack gemäß Tabelle 1 wurde nun pneumatisch appliziert. Die resultierende Wasserbasislackschicht wurde 2 Minuten bei Raumtemperatur abgelüftet und anschließend während 10 Minuten im Umluftofen bei 70°C getrocknet. Auf die getrocknete Wasserbasislackschicht wurde ein üblicher Zweikomponentenklarlack appliziert (Progloss^{®} 345 der Firma BASF Coatings GmbH). Die resultierende Klarlackschicht wurde während 20 Minuten bei Raumtemperatur abgelüftet. Anschließend wurden die Wasserbasislackschicht und die Klarlackschicht in einem Umluftofen während 30 Minuten bei 160°C gehärtet. Der vorliegende Aufbau stellt einen überbrannten Originalaufbau dar und wird im Weiteren als Originallackierung bezeichnet.

Diese Originallackierung wird mit einem Schleifpapier angeschliffen und anschließend der jeweilige Wasserbasislack gemäß Tabelle 1 auf diese angeschliffene Originallackierung pneumatisch appliziert. Die resultierende Wasserbasislackschicht wurde 2 Minuten bei Raumtemperatur abgelüftet und anschließend während 10 Minuten im Umluftofen bei 70°C getrocknet. Auf die getrocknete Wasserbasislackschicht wurde ein sogenannter 80°C-Zweikomponentenklarlack (FF230500 2K Reparaturklarlack, kratzfest der Firma BASF Coatings GmbH) aufgebracht. Die resultierende Klarlackschicht wurde während 20 Minuten bei Raumtemperatur abgelüftet. Anschließend wurden die Wasserbasislackschicht und die Klarlackschicht in einem Umluftofen während 30 Minuten bei 80°C gehärtet.

Die so behandelten Stahlbleche wurden nun über einen Zeitraum von 10 Tagen in einer Klimakammer nach Prüfklima CH nach DIN EN ISO 6270-2:2005-09 gelagert. Anschließend wurden die Bleche 24 Stunden nach Entnahme aus der Klimakammer visuell bezüglich Blasenbildung und Quellung untersucht.

Das Auftreten von Blasen wurde folgendermaßen durch eine Kombination von 2 Werten beurteilt:
- Die Anzahl der Blasen wurde durch eine Mengenangabe von 1 bis 5 bewertet, wobei mit m1 sehr wenige und m5 sehr viele Blasen bezeichnet wurden.
- Die Größe der Blasen wurde durch eine Größenangabe ebenfalls von 1 bis 5 bewertet, wobei mit g1 sehr kleine und g5 sehr große Blasen bezeichnet wurden.
- Die Bezeichnung m0g0 bedeutet demzufolge eine blasenfreie Lackierung nach Schwitzwasserlagerung und stellt bezüglich Blasenbildung ein iO-Ergebnis dar.

**Tabelle 2: Blasenbildung und Quellung von Wasserbasislack 1 und den Wasserbasislacken E1 bis E4**

| **WBL** | **Blasenbildung** | **Quellung** | **Beurteilung** |
|---|---|---|---|
| 1 | m5g1 | keine | niO |
| E1 | m0g0 | keine | iO |
| E2 | m2g1 | keine | niO |
| E3 | m0g0 | keine | iO |
| E4 | m3g1 | keine | niO |

Erklärung:
m = Anzahl an Blasen
g = Größe der Blasen
iO = zufriedenstellendes Ergebnis
niO = nicht zufriedenstellendes Ergebnis
Die Ergebnisse bestätigen, dass bei Einsatz der erfindungsgemäßen Polyester keine Blasen nach Schwitzwasserbelastung mehr auftreten und keine Quellungen mehr sichtbar sind.

### 2. Herstellung eines roten Metallic Wasserbasislacks 2

Die in der Tabelle B unter "wässrige Phase" aufgeführten Komponenten wurden in der angegebenen Reihenfolge zu einer wässrigen Mischung zusammengerührt. Im nächsten Schritt wurde aus den unter "organische Phase" (Effektstoff Schlämme) aufgeführten Komponenten eine organische Mischung hergestellt. Die organische Mischung wurde zur wässrigen Mischung gegeben. Sodann wurde 10 Minuten lang gerührt und mit Hilfe von deionisiertem Wasser und Dimethylethanolamin auf einen pH Wert von 8 und eine Spritzviskosität von 85 mPas bei einer Scherbelastung von 1000 s⁻¹, gemessen mit einem Rotations-Viskosimeter (Gerät Rheomat RM 180 der Firma Mettler-Toledo) bei 23°C, eingestellt.

**Tabelle B:**

| Komponente | Gewichtsteile |
|---|---|
| **Wässrige Phase** | |
| 3%ige Na-Mg-Schichtsilikatlösung | 19,0 |
| Polyurethandispersion; hergestellt gemäß S. 14, Z38 bis 53 der EP1358278 B1 | 15,0 |
| Butylglykol | 2,0 |
| Polyester P1 | 3,6 |
| 10%iges Dimethylethanolamin in Wasser | 1,0 |
| Resimene^{®} HM-2608; Melaminformaldehydharz, erhältlich von Firma Ineos | 3,0 |
| Polyurethanmodifiziertes Polyacrylat; hergestellt gemäß S. 7, Z. 55-S.8, Z. 23 der DE-A-4437535 | 3,0 |
| Deionisiertes Wasser | 19,7 |
| 50 Gew.-% ige Lösung DSX 1550 (BASF) Rheologiemittel | 0,5 |
| 2-Ethylhexanol | 1,0 |
| Pluriol^{®} P900; Polypropylenglykol erhältlich von BASF | 0,8 |
| 3 Gew.-%ige wässrige Viscalex HV 30 Lösung; Rheologiemittel, erhältlich von BASF, in Wasser | 4,0 |
| Rotpaste | 14,0 |
| Russpaste | 0,1 |

| **Effektstoff Schlämme (organische Phase)** | |
|---|---|
| PALIOCROM^{®} ORANGE L2804; beschichtetes Aluminiumpigment erhältlich von BASF | 3,0 |
| Mischung zweier handelsüblicher Aluminiumpigmente, erhältlich von Firma Altana-Eckart | 0,4 |
| Butylglykol | 3,5 |
| Mischlack; hergestellt gemäß S. 14, Z. 15-27 der EP1799783 A1 | 6,4 |

### Herstellung der Rotpaste:

Die Rotpaste wurde aus 45,0 Gewichtsteilen einer gemäß der internationalen Patentanmeldung WO 91/15528 Bindemitteldispersion A hergestellten acrylierten Polyurethandispersion, 21,0 Gewichtsteilen Paliogen^{®} Rot L 3885, 0,7 Gewichtsteilen Dimethylethanolamin, 2,5 Gewichtsteilen 1,2-Propylenglykol und 30,8 Gewichtsteilen deionisiertem Wasser hergestellt.

### Herstellung der Russpaste:

Die Russpaste wurde aus 25 Gewichtsteilen einer gemäß der internationalen Patentanmeldung WO 91/15528 Bindemitteldispersion A hergestellten acrylierten Polyurethandispersion, 10 Gewichtsteilen Russ, 0,1 Gewichtsteilen Methylisobutylketon, 1,36 Gewichtsteilen Dimethylethanolamin, 2 Gewichtsteilen eines handelsüblichen Polyethers (Pluriol^{®} P900 der Firma BASF Aktiengesellschaft) und 61,45 Gewichtsteilen deionisiertem Wasser hergestellt.

### Wasserbasislack E5:

Zur Herstellung des erfindungsgemäßen Wasserbasislacks E5 wurde ein Lack analog der Herstellung des Wasserbasislacks 2 hergestellt, wobei anstelle des Resimene HM-2608 - Melaminformaldehydharz, erhältlich von Firma Ineos - in der wässrigen Phase BE1 eingesetzt wurde.

### Wasserbasislack E6:

Zur Herstellung des nicht erfindungsgemäßen Wasserbasislacks E6 wurde ein Lack analog der Herstellung des Wasserbasislacks 2 hergestellt, wobei anstelle des Resimene HM-2608 - Melaminformaldehydharz, erhältlich von Firma Ineos - in der wässrigen Phase der Polyester P1 eingesetzt wurde.

### Wasserbasislack E7:

Zur Herstellung des nicht erfindungsgemäßen Wasserbasislacks E7 wurde ein Lack analog der Herstellung des Wasserbasislacks 2 hergestellt, wobei anstelle des Resimene HM-2608 - Melaminformaldehydharz, erhältlich von Firma Ineos - in der wässrigen Phase der Polyester P2 eingesetzt wurde.

**Tabelle 3: Zusammensetzungen der Wasserbasislacke 2 und E5 bis E7**

| **WBL** | **[Gew.-%]** | **MFH bzw. MFH-Ersatz** |
|---|---|---|
| 2 | 2,7 | Resime HM-2608 |
| | 2,16 | P1 |
| E5 | 2,7 | BE1 |
| | 2,16 | P1 |
| E6 | 2,7 | P1 |
| | 2,16 | P1 |
| E7 | 2,7 | P2 |
| | 2,16 | P1 |

Die Gewichtsprozentangaben in Tabelle 3 beziehen sich auf das Gesamtgewicht des Wasserbasislacks.

MFH = Melamin-Formaldehyd-Harz

### Vergleich zwischen Wasserbasislack 2 und den Wasserbasislacken E5-E7

Zur Bestimmung der Stabilität gegen das Auftreten von Blasen und Quellungen nach Schwitzwasserlagerung wurden die Kunststofflackierungen nach der folgenden allgemeinen Vorschrift hergestellt:
Ein Kunststoffsubstrat aus PP-EPDM (Hifax EKC 112X der Firma Lyondell-Basell) wurde mit einem Entfettungsmittel gereinigt und anschließend mit einem Laborflammgerät mit einer blauen oxidierenden Flamme kurz beflammt.

**Einstellung der Beflammungsparameter:**

| | |
|---|---|
| Geschwindigkeit | 0,13 m/s |
| Abstand Flamme zum Objekt | 5 cm |
| Gas (Propan) | 258 L/h |
| Luft | 6600 L/h |
| Gas/Luft Mischung | 1:26 |

Anschließend wurde ein 2K Füller (Schiefergrau R1471 mit Härter WW60738 100:10 der Firma Worwag) auf die Tafeln appliziert, 10 Minuten bei Raumtemperatur abgelüftet und anschließend während 30 Minuten im Umluftofen bei 80°C getrocknet. Der Wasserbasislack wurde pneumatisch appliziert. Die resultierende Wasserbasislackschicht wurde 2 Minuten bei Raumtemperatur abgelüftet und anschließend während 10 Minuten im Umluftofen bei 70°C getrocknet. Auf die getrocknete Wasserbasislackschicht wurde ein üblicher Low-Bake 80°C-Zweikomponentenklarlack appliziert (EverGloss^{®} 905 der Firma BASF Coatings GmbH). Die resultierende Klarlackschicht wurde während 10 Minuten bei Raumtemperatur abgelüftet. Anschließend wurden die Wasserbasislackschicht und die Klarlackschicht in einem Umluftofen während 40 Minuten bei 80°C gehärtet. Der vorliegende Aufbau stellt einen Kunststoffanbauteile Originalaufbau dar.

Die Tafeln wurden sieben Tage bei Raumtemperatur gelagert. Anschließend wurde eine Schwitzwasserlagerung im Prüfklima CH nach DIN EN ISO 6270-2:2005-09 (Prüfdauer 10 Tage) durchgeführt.

30 Minuten und 24 Stunden nach Entnahme aus der Klimakammer wurden die Tafeln visuell bezüglich Blasenbildung und Quellung untersucht.

Nach 24 Stunden wurde zusätzlich ein Dampfstrahltest nach Prüfverfahren A der DIN 55662:2009-12 durchgeführt. Der Prüfling wird nach der Dampfstrahlbelastung visuell auf Ablösung der Lackoberfläche und am Andreaskreuz betrachtet. Es wird der Grad der Schädigung entsprechend der Abbildungen im Bild 4, Abschnitt 9.2 der DIN 55662:2009-12 beurteilt. Bei der Beurteilung werden geringe Abplatzungen bis 1 mm durch ungünstiges Schneiden am Kreuzschnitt nicht mit bewertet. Nach der Dampfstrahlprüfung darf keine Delamination der Lackschichten auftreten.

**Tabelle 4: Blasen / Quellung / Dampfstrahltest von Wasserbasislack 2 und den Wasserbasislacken E5 bis E7**

| **WBL** | **Blasenbildung/ Quellung 0,5h** | **Blasenbildung/ Quellung 24h** | **Dampfstrahl** |
|---|---|---|---|
| 2 | m2g1/ stark | m1g1/ mittel | niO 4a BC/CC |
| E5 | m0g0/ leicht | m0g0/ keine | iO |
| E6 | m3g1/ stark | m2g1/ mittel | niO 3a BC/CC |
| E7 | m2g1/ stark | m1g1/ mittel | niO 2a BC/CC |

Erklärung:
m = Anzahl der Blasen
g = Größe der Blasen
iO = zufriedenstellendes Ergebnis
niO = nicht zufriedenstellendes Ergebnis
BC/CC = Basislack-Klarlack Trennebene
Mit 4a, 3a und 2a sind die Kennwerte aus der DIN 55662 gemeint.

Die Ergebnisse zeigen eindeutig, dass bei Einsatz der erfindungsgemäßen Polyester keine Blasen nach Schwitzwasserbelastung mehr auftreten und keine Quellungen mehr sichtbar sind. Weiterhin ist die Basislack-Klarlack Haftung deutlich besser geworden.

### 3. Herstellung eines silbernen Wasserbasislacks 3

Die in der Tabelle C unter "wässrige Phase" aufgeführten Komponenten wurden in der angegebenen Reihenfolge zu einer wässrigen Mischung zusammengerührt. Im nächsten Schritt wurde aus den unter "organische Phase" aufgeführten Komponenten eine organische Mischung hergestellt. Die organische Mischung wurde zur wässrigen Mischung hinzugegeben. Sodann wurde 10 Minuten lang gerührt und mit Hilfe von deionisiertem Wasser und Dimethylethanolamin auf einen pH Wert von 8 und eine Spritzviskosität von 58 mPas bei einer Scherbelastung von 1000 s⁻¹, gemessen mit einem Rotations-Viskosimeter (Gerät Rheomat RM 180 der Firma Mettler-Toledo) bei 23°C, eingestellt.

**Tabelle C:**

| Komponente | Gewichtsteile |
|---|---|
| **Wässrige Phase** | |
| 3%ige Na-Mg-Schichtsilikatlösung | 26 |
| Deionisiertes Wasser | 21,7 |
| Butylglykol | 2,8 |
| Polyurethanmodifiziertes Polyacrylat; hergestellt gemäß S. 7, Z. 55 bis S.8, Z. 23 der DE 4437535 A | 4,5 |
| 50 Gew.-%ige Lösung DSX 1550 (BASF) Rheologiemittel | 0,6 |
| P1 | 13,3 |
| Tensid S (BASF) | 0,3 |
| Melaminformaldehydharz (Cymel 203 von Cytec) | 4,1 |
| 10%iges Dimethylethanolamin in Wasser | 0,3 |
| Pfropfmischpolymerisat auf Polyurethanbasis; hergestellt gemäß S. 19, Z. 44 bis S. 20, Z. 21 der DE 19948004 A | 1,8 |
| Tensid S (BASF) | 1,6 |
| 3 Gew.-%ige wässrige Viscalex HV 30 Lösung; Rheologiemittel, erhältlich von BASF | 3,9 |

| **Organische Phase** | |
|---|---|
| Mischung zweier handelsüblicher Aluminiumpigmente, erhältlich von Firma Altana-Eckart | 6,2 |
| Butylglykol | 7,5 |
| P1 | 5 |

### Wasserbasislack E8:

Zur Herstellung des erfindungsgemäßen Wasserbasislacks E8 wurde ein Lack analog der Herstellung des Wasserbasislacks 3 hergestellt, wobei anstelle des Polyesters P1 sowohl in der wässrigen Phase als auch in der organischen Phase BE1 eingesetzt wurde.

### Wasserbasislack E9:

Zur Herstellung des nicht erfindungsgemäßen Wasserbasislacks E9 wurde ein Lack analog der Herstellung des Wasserbasislacks 3 hergestellt, wobei anstelle des Polyesters P1 sowohl in der wässrigen Phase als auch in der organischen Phase BV1 eingesetzt wurde.

### Wasserbasislack E10:

Zur Herstellung des erfindungsgemäßen Wasserbasislacks E10 wurde ein Lack analog der Herstellung des Wasserbasislacks 3 hergestellt, wobei anstelle des Polyesters P1 sowohl in der wässrigen Phase als auch in der organischen Phase BE2 eingesetzt wurde.

### Wasserbasislack E11:

Zur Herstellung des nicht erfindungsgemäßen Wasserbasislacks E11 wurde ein Lack analog der Herstellung des Wasserbasislacks 3 hergestellt, wobei anstelle des Polyesters P1 sowohl in der wässrigen Phase als auch in der organischen Phase BV2 eingesetzt wurde.

**Tabelle 5: Zusammensetzungen der Wasserbasislacke 3 und E8 bis E11**

| **WBL** | **[Gew.-%]** | **Polymer** |
|---|---|---|
| 3 | 10,98 | P1 |
| E8 | 10,98 | BE1 |
| E9 | 10,98 | BV1 |
| E10 | 10,98 | BE2 |
| E11 | 10,98 | BV2 |

Die Gewichtsprozentangaben in Tabelle 5 beziehen sich auf das Gesamtgewicht des Wasserbasislacks.

### Vergleich zwischen Wasserbasislack 3 und den Wasserbasislacken E8 bis E11

Zur Bestimmung der Stabilität gegen das Auftreten von Blasen und Quellungen nach Schwitzwasserlagerung wurden die Mehrschichtlackierungen nach der folgenden allgemeinen Vorschrift hergestellt:

Ein mit einer Standard-KTL (Cathoguard^{®} 800 der Firma BASF Coatings GmbH) beschichtetes Stahlblech der Abmessungen 10 x 20 cm wurde mit einem Standard-Füller (ALG 670173 - Füller mittelgrau der Firma Hemmelrath) beschichtet. Nach Zwischentrocknen des wässrigen Füllers über einen Zeitraum von 10 Minuten bei 80°C wurde der Füller bei einer Temperatur von 190°C über einen Zeitraum von 30 Minuten eingebrannt.

Der jeweilige Wasserbasislack gemäß Tabelle 5 wurde nun pneumatisch appliziert. Die resultierende Wasserbasislackschicht wurde 2 Minuten bei Raumtemperatur abgelüftet und anschließend während 10 Minuten im Umluftofen bei 70°C getrocknet. Auf die getrocknete Wasserbasislackschicht wurde ein üblicher Zweikomponentenklarlack appliziert (Progloss^{®} 345 der Firma BASF Coatings GmbH). Die resultierende Klarlackschicht wurde während 20 Minuten bei Raumtemperatur abgelüftet. Anschließend wurden die Wasserbasislackschicht und die Klarlackschicht in einem Umluftofen während 30 Minuten bei 160°C gehärtet. Der vorliegende Aufbau stellt einen überbrannten Originalaufbau dar und wird im Weiteren als Originallackierung bezeichnet.

Diese Originallackierung wird mit einem Schleifpapier angeschliffen und anschließend der jeweilige Wasserbasislack gemäß Tabelle 5 auf diese angeschliffene Originallackierung pneumatisch appliziert. Die resultierende Wasserbasislackschicht wurde 2 Minuten bei Raumtemperatur abgelüftet und anschließend während 10 Minuten im Umluftofen bei 70°C getrocknet. Auf die getrocknete Wasserbasislackschicht wurde ein so genannter 80°C-Zweikomponentenklarlack (FF230500 2K Reparaturklarlack, kratzfest der Firma BASF Coatings GmbH) aufgebracht. Die resultierende Klarlackschicht wurde während 20 Minuten bei Raumtemperatur abgelüftet. Anschließend wurden die Wasserbasislackschicht und die Klarlackschicht in einem Umluftofen während 30 Minuten bei 80°C gehärtet.

Die so behandelten Stahlbleche wurden nun über einen Zeitraum von 10 Tagen in einer Klimakammer nach Prüfklima CH nach DIN EN ISO 6270-2:2005-09 gelagert. Anschließend wurden die Bleche 24 Stunden nach Entnahme aus der Klimakammer visuell bezüglich Blasenbildung und Quellung untersucht.

Das Auftreten von Blasen wurde folgendermaßen durch eine Kombination von 2 Werten beurteilt:
- Die Anzahl der Blasen wurde durch eine Mengenangabe von 1 bis 5 bewertet, wobei mit m1 sehr wenige und m5 sehr viele Blasen bezeichnet wurden.
- Die Größe der Blasen wurde durch eine Größenangabe ebenfalls von 1 bis 5 bewertet, wobei mit g1 sehr kleine und g5 sehr große Blasen bezeichnet wurden.
- Die Bezeichnung m0g0 bedeutet demzufolge eine blasenfreie Lackierung nach Schwitzwasserlagerung und stellt bezüglich Blasenbildung ein iO-Ergebnis dar.

**Tabelle 6: Blasenbildung und Quellung von Wasserbasislack 3 und den Wasserbasislacken E8 bis E11**

| **WBL** | **Blasenbildung** | **Quellung** | **Beurteilung** |
|---|---|---|---|
| 3 | m5g4 | keine | niO |
| E8 | m0g0 | keine | iO |
| E9 | m3g2 | keine | niO |
| E10 | m0g0 | keine | iO |
| E11 | m2g2 | keine | niO |

Erklärung:
m = Anzahl an Blasen
g = Größe der Blasen
iO = zufriedenstellendes Ergebnis
niO = nicht zufriedenstellendes Ergebnis
Die Ergebnisse bestätigen, dass bei Einsatz der erfindungsgemäßen Polyester keine Blasen nach Schwitzwasserbelastung mehr auftreten und keine Quellungen mehr sichtbar sind.

## Patentansprüche

1. Polymer, herstellbar durch Umsetzung von
(a) Dimerfettsäuren mit
(b) mindestens einem Polyether der allgemeinen Strukturformel (I) 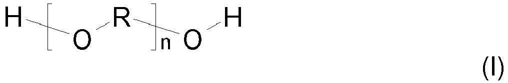 wobei es sich bei R um einen C₄-Alkylenrest handelt und n entsprechend so gewählt ist, dass der besagte Polyether ein zahlenmittleres Molekulargewicht, gemessen mittels Gelpermeationschromatographie gegen einen Polymethylmethacrylatstandard, Eluent: Tetrahydrofuran, von 450 bis 2200 g/mol besitzt, die Komponenten (a) und (b) in einem molaren Verhältnis von 0,7/2,3 bis 1,3/1,7 eingesetzt werden und das resultierende Polymer ein zahlenmittleres Molekulargewicht, gemessen mittels Gelpermeationschromatographie gegen einen Polymethylmethacrylatstandard, Eluent: Tetrahydrofuran, von 1500 bis 5000 g/mol und eine Säurezahl < 10 mg KOH/g besitzt.

2. Polymer gemäß Anspruch 1, **dadurch gekennzeichnet, dass** die eingesetzten Dimerfettsäuren zu mindestens 90 Gew.-% aus dimeren Molekülen, weniger als 5 Gew.-% aus trimeren Molekülen und zu weniger als 5 Gew.-% aus monomeren Molekülen und sonstigen Nebenprodukten bestehen.

3. Polymer nach Anspruch 1, **dadurch gekennzeichnet, dass** die eingesetzte Dimerfettsäure aus Linolen-, Linol- und/oder Ölsäure hergestellt wird und zu mindestens 98 Gew.-% aus dimeren Molekülen, weniger als 1,5 Gew.-% aus trimeren Molekülen und zu weniger als 0,5 Gew.-% aus monomeren Molekülen und sonstigen Nebenprodukten besteht und eine lodzahl von ≤ 10 g/100g besitzt.

4. Polymer nach mindestens einem der Ansprüche 1 bis 3, **dadurch gekennzeichnet, dass** es sich bei dem besagten Polyether der allgemeinen Strukturformel (I) um Polytetrahydrofuran handelt und dieser zudem ein zahlenmittleres Molekulargewicht, gemessen mittels Gelpermeationschromatographie gegen einen Polymethylmethacrylatstandard, Eluent: Tetrahydrofuran, von 800 bis 1200 g/mol besitzt.

5. Polymer nach mindestens einem der Ansprüche 1 bis 4, **dadurch gekennzeichnet, dass** die Komponenten (a) und (b) in einem molaren Verhältnis von 0,9/2,1 bis 1,1/1,9 eingesetzt werden.

6. Polymer nach mindestens einem der Ansprüche 1 bis 5, **dadurch gekennzeichnet, dass** dieses ein zahlenmittleres Molekulargewicht, gemessen mittels Gelpermeationschromatographie gegen einen Polymethylmethacrylatstandard, Eluent: Tetrahydrofuran, von 3000 bis 4000 g/mol besitzt.

7. Polymer nach mindestens einem der Ansprüche 1 bis 6, **dadurch gekennzeichnet, dass** dieses eine Säurezahl von < 5 mg KOH/g besitzt.

8. Pigmentierter wässriger Basislack, **dadurch gekennzeichnet, dass** er mindestens ein Polymer, herstellbar durch Umsetzung von
(a) Dimerfettsäuren mit
(b) mindestens einem Polyether der allgemeinen Strukturformel (I) 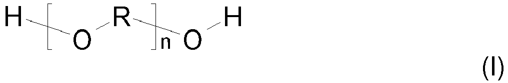 wobei es sich bei R um einen C₃-C₆-Alkylenrest handelt und n entsprechend so gewählt ist, dass der besagte Polyether ein zahlenmittleres Molekulargewicht, gemessen mittels Gelpermeationschromatographie gegen einen Polymethylmethacrylatstandard, Eluent: Tetrahydrofuran, von 450 bis 2200 g/mol besitzt, die Komponenten (a) und (b) in einem molaren Verhältnis von 0,7/2,3 bis 1,3/1,7 eingesetzt werden und das resultierende Polymer ein zahlenmittleres Molekulargewicht, gemessen mittels Gelpermeationschromatographie gegen einen Polymethylmethacrylatstandard, Eluent: Tetrahydrofuran, von 1500 bis 5000 g/mol und eine Säurezahl < 10 mg KOH/g besitzt, enthält.

9. Pigmentierter wässriger Basislack gemäß Anspruch 8, **dadurch gekennzeichnet, dass** die Summe über die gewichtsprozentualen Anteile, bezogen auf das Gesamtgewicht des pigmentierten wässrigen Basislacks, aller Polymere gemäß Anspruch 8 0,1 bis 30 Gew.-% beträgt.

10. Pigmentierter wässriger Basislack nach Anspruch 8 oder 9, **dadurch gekennzeichnet, dass** er als weiteres Bindemittel mindestens ein Polyurethanharz enthält.

11. Verwendung eines Polymers, herstellbar durch Umsetzung von
(a) Dimerfettsäuren mit
(b) mindestens einem Polyether der allgemeinen Strukturformel (I) 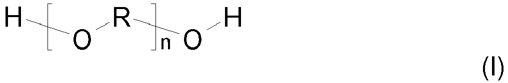 wobei es sich bei R um einen C₃-C₆-Alkylenrest handelt und n entsprechend so gewählt ist, dass der besagte Polyether ein zahlenmittleres Molekulargewicht, gemessen mittels Gelpermeationschromatographie gegen einen Polymethylmethacrylatstandard, Eluent: Tetrahydrofuran, von 450 bis 2200 g/mol besitzt, die Komponenten (a) und (b) in einem molaren Verhältnis von 0,7/2,3 bis 1,3/1,7 eingesetzt werden und das resultierende Polymer ein zahlenmittleres Molekulargewicht, gemessen mittels Gelpermeationschromatographie gegen einen Polymethylmethacrylatstandard, Eluent: Tetrahydrofuran, von 1500 bis 5000 g/mol und eine Säurezahl < 10 mg KOH/g besitzt, in pigmentierten wässrigen Basislacken zur Haftungsverbesserung.

12. Verfahren zur Herstellung einer mehrschichtigen Lackierung, bei dem
(1) ein pigmentierter wässriger Basislack auf ein Substrat aufgebracht wird,
(2) aus dem in Stufe (1) aufgebrachten Lack ein Polymerfilm gebildet wird,
(3) auf die so erhaltene Basislackschicht ein Klarlack aufgebracht wird und anschließend
(4) die Basislackschicht zusammen mit der Klarlackschicht gehärtet wird,
**dadurch gekennzeichnet, dass** in Stufe (1) ein pigmentierter wässriger Basislack gemäß mindestens einem der Ansprüche 8 bis 10 eingesetzt wird.

13. Verfahren nach Anspruch 12, **dadurch gekennzeichnet, dass** es sich bei dem besagten Substrat aus Stufe (1) um eine Mehrschichtlackierung handelt, welche Fehlstellen besitzt.

14. Mehrschichtlackierung, herstellbar nach dem Verfahren gemäß Anspruch 12.

15. Verfahren nach Anspruch 12, **dadurch gekennzeichnet, dass** es sich bei der besagten Mehrschichtlackierung, welche Fehlstellen besitzt, um eine solche gemäß Anspruch 14 handelt.

## Claims

1. Polymer preparable by reaction of
(a) dimer fatty acids with
(b) at least one polyether of the general structural formula (I) 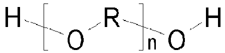 where R is a C₄ alkylene radical and n is selected accordingly such that said polyether has a number-average molecular weight, measured by means of gel permeation chromatography against a polyether methacrylate standard, eluent: tetrahydrofuran, of 450 to 2200 g/mol, components (a) and (b) are used in a molar ratio of 0.7/2.3 to 1.3/1.7, and the resulting polymer has a number-average molecular weight, measured by means of gel permeation chromatography against a polyether methacrylate standard, eluent: tetrahydrofuran, of 1500 to 5000 g/mol and an acid number < 10 mg KOH/g.

2. Polymer according to Claim 1, **characterized in that** the dimer fatty acids used consist to an extent of at least 90% by weight of dimeric molecules, less than 5% by weight of trimeric molecules, and less than 5% by weight of monomeric molecules and other by-products.

3. Polymer according to Claim 1, **characterized in that** the dimer fatty acid used is prepared from linolenic, linoleic and/or oleic acid and consists to an extent of at least 98% by weight of dimeric molecules, less than 1.5% by weight of trimeric molecules, and less than 0.5% by weight of monomeric molecules and other by-products, and has an iodine number of ≤ 10 g/100 g.

4. Polymer according to at least one of Claims 1 to 3, **characterized in that** said polyether of the general structural formula (I) is polytetrahydrofuran and also has a number-average molecular weight, measured by means of gel permeation chromatography against a polymethyl methacrylate standard, eluent: tetrahydrofuran, of 800 to 1200 g/mol.

5. Polymer according to at least one of Claims 1 to 4, **characterized in that** components (a) and (b) are used in a molar ratio of 0.9/2.1 to 1.1/1.9.

6. Polymer according to at least one of Claims 1 to 5, **characterized in that** it has a number-average molecular weight, measured by means of gel permeation chromatography against a polymethyl methacrylate standard, eluent: tetrahydrofuran, of 3000 to 4000 g/mol.

7. Polymer according to at least one of Claims 1 to 6, **characterized in that** it has an acid number of < 5 mg KOH/g.

8. Pigmented aqueous basecoat material, **characterized in that** it comprises at least one polymer preparable by reaction of
(a) dimer fatty acids with
(b) at least one polyether of the general structural formula (I) 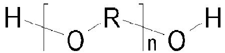 where R is a C₃-C₆ alkylene radical and n is selected accordingly such that said polyether has a number-average molecular weight, measured by means of gel permeation chromatography against a polyether methacrylate standard, eluent: tetrahydrofuran, of 450 to 2200 g/mol, components (a) and (b) are used in a molar ratio of 0.7/2.3 to 1.3/1.7, and the resulting polymer has a number-average molecular weight, measured by means of gel permeation chromatography against a polyether methacrylate standard, eluent: tetrahydrofuran, of 1500 to 5000 g/mol and an acid number < 10 mg KOH/g.

9. Pigmented aqueous basecoat material according to Claim 8, **characterized in that** the sum total of the weight-percentage fractions, based on the total weight of the pigmented aqueous basecoat material, of all the polymers according to Claim 8 is 0.1% to 30% by weight.

10. Pigmented aqueous basecoat material according to Claim 8 or 9, **characterized in that** it comprises, as a further binder, at least one polyurethane resin.

11. Use of a polymer preparable by reaction of
(a) dimer fatty acids with
(b) at least one polyether of the general structural formula (I) 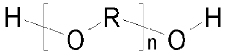 where R is a C₃-C₆ alkylene radical and n is selected accordingly such that said polyether has a number-average molecular weight, measured by means of gel permeation chromatography against a polyether methacrylate standard, eluent: tetrahydrofuran, of 450 to 2200 g/mol, components (a) and (b) are used in a molar ratio of 0.7/2.3 to 1.3/1.7, and the resulting polymer has a number-average molecular weight, measured by means of gel permeation chromatography against a polyether methacrylate standard, eluent: tetrahydrofuran, of 1500 to 5000 g/mol and an acid number < 10 mg KOH/g, in pigmented aqueous basecoat materials for promoting adhesion.

12. Method for producing a multicoat paint system, by
(1) applying a pigmented aqueous basecoat material to a substrate,
(2) forming a polymer film from the coating material applied in stage (1),
(3) applying a clearcoat material to the resulting basecoat film, and subsequently
(4) curing the basecoat film together with the clearcoat film,
**characterized in that** in stage (1) a pigmented aqueous basecoat material according to at least one of Claims 8 to 10 is used.

13. Method according to Claim 12, **characterized in that** said substrate from stage (1) is a multicoat paint system which has defect areas.

14. Multicoat paint system producible by the method according to Claim 12.

15. Method according to Claim 12, **characterized in that** said multicoat paint system which has defect areas is a paint system according to Claim 14.

## Revendications

1. Polymère, pouvant être fabriqué par mise en réaction de
(a) des acides gras dimères avec
(b) au moins un polyéther de formule structurale générale (I) 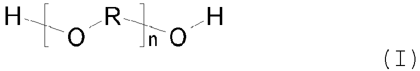 dans laquelle R est un radical alkylène en C₄ et n est choisi de façon adéquate de sorte que ledit polyéther présente un poids moléculaire moyen en nombre, mesuré par chromatographie par perméation de gel contre un étalon poly(méthacrylate de méthyle), éluent : tétrahydrofurane, de 450 à 2 200 g/mol, les composants (a) et (b) étant utilisés en un rapport molaire de 0,7/2,3 à 1,3/1,7, et le polymère résultant présentant un poids moléculaire moyen, mesuré par chromatographie par perméation de gel contre un étalon poly(méthacrylate de méthyle), éluent : tétrahydrofurane, de 1 500 à 5 000 g/mol et un indice d'acidité < 10 mg KOH/g.

2. Polymère selon la revendication 1, **caractérisé en ce que** les acides gras dimères utilisés sont constitués par au moins 90 % en poids de molécules dimères, moins de 5 % en poids de molécules trimères et moins de 5 % en poids de molécules monomères et d'autres produits secondaires.

3. Polymère selon la revendication 1, **caractérisé en ce que** l'acide gras dimère utilisé est fabriqué à partir d'acide linolénique, linoléique et/ou oléique et est constitué par au moins 98 % en poids de molécules dimères, moins de 1,5 % en poids de molécules trimères et moins de 0,5 % en poids de molécules monomères et d'autres produits secondaires et possède un indice d'iode ≤ 10 g/100 g.

4. Polymère selon au moins l'une des revendications 1 à 3, **caractérisé en ce que** ledit polyéther de formule structurale générale (I) est le polytétrahydrofurane et celui-ci présente par ailleurs un poids moléculaire moyen en nombre, mesuré par chromatographie par perméation de gel contre un étalon poly(méthacrylate de méthyle), éluent : tétrahydrofurane, de 800 à 1 200 g/mol.

5. Polymère selon au moins l'une des revendications 1 à 4, **caractérisé en ce que** les composants (a) et (b) sont utilisés en un rapport molaire de 0,9/2,1 à 1,1/1,9.

6. Polymère selon au moins l'une des revendications 1 à 5, **caractérisé en ce que** celui-ci présente un poids moléculaire moyen, mesuré par chromatographie par perméation de gel contre un étalon poly(méthacrylate de méthyle), éluent : tétrahydrofurane, de 3 000 à 4 000 g/mol.

7. Polymère selon au moins l'une des revendications 1 à 6, **caractérisé en ce que** celui-ci présente un indice d'acidité < 5 mg KOH/g.

8. Vernis de base aqueux pigmenté, **caractérisé en ce qu'**il contient au moins un polymère pouvant être fabriqué par mise en réaction de
(a) des acides gras dimères avec
(b) au moins un polyéther de formule structurale générale (I) 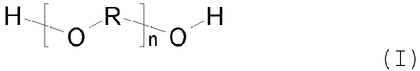 dans laquelle R est un radical alkylène en C₃ à C₆ et n est choisi de façon adéquate de sorte que ledit polyéther présente un poids moléculaire moyen en nombre, mesuré par chromatographie par perméation de gel contre un étalon poly(méthacrylate de méthyle), éluent : tétrahydrofurane, de 450 à 2 200 g/mol, les composants (a) et (b) étant utilisés en un rapport molaire de 0,7/2,3 à 1,3/1,7, et le polymère résultant présentant un poids moléculaire moyen en nombre, mesuré par chromatographie par perméation de gel contre un étalon poly(méthacrylate de méthyle), éluent : tétrahydrofurane, de 1 500 à 5 000 g/mol et un indice d'acidité < 10 mg KOH/g.

9. Vernis de base aqueux pigmenté selon la revendication 8, **caractérisé en ce que** la somme des proportions en pourcentage en poids, par rapport au poids total du vernis de base aqueux pigmenté, de tous les polymères selon la revendication 8 est de 0,1 à 30 % en poids.

10. Vernis de base aqueux pigmenté selon la revendication 8 ou 9, **caractérisé en ce qu'**il contient en tant que liant supplémentaire au moins une résine de polyuréthane.

11. Utilisation d'un polymère pouvant être fabriqué par mise en réaction de
(a) des acides gras dimères avec
(b) au moins un polyéther de formule structurale générale (I) 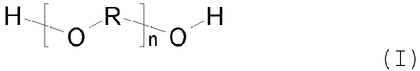 dans laquelle R est un radical alkylène en C₃ à C₆ et n est choisi de façon adéquate de sorte que ledit polyéther présente un poids moléculaire moyen en nombre, mesuré par chromatographie par perméation de gel contre un étalon poly(méthacrylate de méthyle), éluent : tétrahydrofurane, de 450 à 2 200 g/mol, les composants (a) et (b) étant utilisés en un rapport molaire de 0,7/2,3 à 1,3/1,7, et le polymère résultant présentant un poids moléculaire moyen en nombre, mesuré par chromatographie par perméation de gel contre un étalon poly(méthacrylate de méthyle), éluent : tétrahydrofurane, de 1 500 à 5 000 g/mol et un indice d'acidité < 10 mg KOH/g, dans des vernis de base aqueux pigmentés pour l'amélioration de l'adhésion.

12. Procédé de fabrication d'un vernissage multicouche, selon lequel
(1) un vernis de base aqueux pigmenté est appliqué sur un substrat,
(2) un film polymère est formé à partir du vernis appliqué à l'étape (1),
(3) un vernis transparent est appliqué sur la couche de vernis de base ainsi obtenue, puis
(4) la couche de vernis de base est durcie conjointement avec la couche de vernis transparent,
**caractérisé en ce qu'**à l'étape (1), un vernis de base aqueux pigmenté selon au moins l'une des revendications 8 à 10 est utilisé.

13. Procédé selon la revendication 12, **caractérisé en ce que** ledit substrat de l'étape (1) est un vernissage multicouche qui présente des défauts.

14. Vernissage multicouche, pouvant être fabriqué par le procédé selon la revendication 12.

15. Procédé selon la revendication 12, **caractérisé en ce que** ledit vernissage multicouche qui présente des défauts est un vernissage multicouche selon la revendication 14.
